# EUROPÄISCHE PATENTSCHRIFT

(11) **EP 2 759 800 B1**
(45) Veröffentlichungstag und Bekanntmachung des Hinweises auf die Patenterteilung: **11.03.2020**
(21) Anmeldenummer: 14152753.1
(22) Anmeldetag: 28.01.2014
(51) Int. Cl.: G01K 1/20, G01B 5/00, G01B 21/04, G01B 7/004, G01B 5/004, G01B 11/00

(54) **Temperaturkompensierter Messtaster**
Temperature-compensated measuring probe
Palpeur de mesure compensé en température

(30) Priorität: 28.01.2013 DE 102013001457
(43) Veröffentlichungstag der Anmeldung: 30.07.2014
(73) Patentinhaber: Blum-Novotest GmbH, 88287 Grünkraut-Gullen (DE)
(72) Erfinder: Mörsch, Norbert, 88239 Wangen (DE)
(74) Vertreter: Schmidt, Steffen J.

(56) Entgegenhaltungen:
- EP-A2- 2 629 048
- WO-A2-2008/027588
- US-A1- 2002 104 227
- US-A1- 2005 166 413
- US-A1- 2010 325 907
- US-A1- 2012 004 886
- US-A1- 2012 029 857

## Beschreibung

### Hintergrund

Hier wird eine Temperaturkompensation eines in einer Werkstückbearbeitungsmaschine aufzunehmenden Messtasters und ein temperaturkompensierter Messtaster beschrieben.

Die Werkstückbearbeitungsmaschine kann eine (numerisch gesteuerte) Werkzeugmaschine, ein (Mehrachsen-)Bearbeitungszentrum, eine (Mehrachsen-)Fräsmaschine oder dergl. sein. Nachstehend wird für alle diese oder derartigen Maschinen auch der Begriff Werkzeugmaschine verwendet. Eine solche Maschine hat eine Spindel, an der ein Werkzeug oder ein Werkstück montiert ist; die Spindel kann fest positioniert oder zum Beispiel in drei orthogonalen Richtungen X, Y, Z innerhalb eines Arbeitsraums der Maschine bewegt und angetrieben werden.

Das Werkzeug kann durch die Werkzeugmaschine in einen Messraum, einen zur Messung festgelegten Bereich, eines berührend oder berührungslos funktionierenden Tasters bewegt werden. Der berührungslos funktionierende Taster detektiert die Nähe einer Oberfläche beispielsweise mit einer kapazitiven, induktiven oder optischen Einrichtung. Der berührend funktionierende Tasters detektiert eine Oberfläche bei Kontakt. Für jedes detektierte Merkmal geben Kontakt- und kontaktlose Taster entsprechende Messdaten an eine numerische (Maschinen-)Steuerung weiter, die ein Computerprogramm enthalten kann. Zusammen mit Maschinenpositionsinformationen aus der Steuerung ermöglichen die Tastermessdaten, dass die (numerische) Steuerung ein genaues Bild der Abmessungen des Werkzeugs oder Werkstücks ermitteln kann.

### Stand der Technik

Aus der DE 102 62 188 A1 ist ein multidirektionaler Messtaster bekannt. Dieser Messtaster hat ein Gehäuse, in dem ein ringförmiges Stützlager ausgebildet ist, das eine X, Y - Lagerebene und eine dazu normale zentrale Achse Z des Messtasters definiert. Ein Tragkörper hat ein ringförmiges Gegenlager, durch das eine Längsachse des Tragkörpers definiert ist. Eine Feder ist zwischen dem Gehäuse und dem Tragkörper eingespannt und bestrebt letzteren in einer Ruhelage zu halten, in der das Gegenlager am Stützlager anliegt und die Längsachse des Tragkörpers mit der zentralen Achse Z des Messtasters übereinstimmt. Eine Taststiftaufnahme ist am Tragkörper zentral angeordnet um einen Taststift aufzunehmen. Ein Übertragungsglied ist im Gehäuse entlang der zentralen Achse Z verschiebbar geführt um beliebige Auslenkungen des Tragkörpers aus seiner Ruhelage in geradlinige Bewegungen umzusetzen. Ein Sensor setzt solche Bewegungen des Übertragungsgliedes in Messsignale um. Ein Ende des Übertragungsgliedes ist an der Taststiftaufnahme mittig angeordnet und nur ein an das andere Ende angrenzender Abschnitt ist in Richtung der zentralen Achse Z geführt. Das Übertragungsglied ist an einer Stelle des Tragkörpers angeordnet, die vom Sensor aus betrachtet jenseits der Lagerebene liegt. Der Sensor kann Teil einer Lichtschranke mit wegabhängig analogem Messsignal sein. Die Taststiftaufnahme kann entlang der Längsachse des Tragkörpers an diesem verschiebbar geführt und in Richtung auf eine durch einen Anschlag definierte Normalstellung federnd vorgespannt sein.

Aus der US 3,250,012 A ist ein Messtaster mit einem zylindrischen Gehäuse bekannt, das aus einem proximalen und einem distalen Gehäuseteil zusammengesetzt ist. Das proximale Gehäuseteil hat einen radial nach außen ragenden Flansch zur Befestigung des Messtasters an einem Schlitten einer Mess- oder Werkzeugmaschine. Das distale Gehäuseteil endet mit einem radial nach innen ragenden Flansch, an dem ein kugelsegmentförmiges konkaves Stützlager ausgebildet ist. Auf diesem Stützlager ruht ein ungefähr halbkugelförmiger Tragkörper, der mit seiner konvexen Außenfläche ein ringförmiges Gegenlager bildet und an seiner proximalen Seite eine ebene Ringfläche aufweist. An dieser Ringfläche liegt eine Stirnfläche eines kolbenartiges Übertragungsgliedes an, das im distalen Gehäuseteil axial verschiebbar geführt und von einer zwischen dem Übertragungsglied und dem ihm zugewandten Ende des proximalen Gehäuseteils eingespannten Feder belastet ist. Im Gehäuse und teilweise in dem kolbenartigen Übertragungsglied ist ein Sensor untergebracht, der axiale Verschiebungen des Kolbens in Messsignale umwandelt. Vom Tragkörper erstreckt sich axial eine Taststiftaufnahme weg, an der ein Taststift mit einem Tastkopf befestigt ist.

Aus der WO 00/17602 A1 sind ebenfalls Messtaster bekannt. Hierbei ist das Übertragungsglied ein gerades Stück Draht von erheblicher Länge und ist in einem Gehäuse untergebracht, dessen Länge diejenige des Übertragungsgliedes noch wesentlich überschreitet. Ein ähnlicher multidirektionaler Messtaster ist aus DE 42 17 641 A1 bekannt.

Auch dort ist innerhalb eines distalen Gehäuseteils ein halbkugelförmiger Tragkörper angeordnet, gegen den ein Übertragungsglied in Form eines federbelasteten Kolbens drückt. Die ebene Fläche des halbkugelförmigen Tragkörpers ist hier jedoch diejenige, von der sich die Taststiftaufnahme weg erstreckt, wohingegen die sphärische Fläche des Tragkörpers dem wiederum kolbenartigen Übertragungsglied zugewandt ist und über dieses von einer Feder in axialer Richtung belastet wird.

Der Anmelderin sind aus ihrer betrieblichen Praxis Werkzeugmaschinen mit Werkzeugaufnahmen und Messtaster bekannt, die in die Werkzeugaufnahme der Werkzeugmaschinen einzusetzen sind. Eine Werkzeugmaschine kann zum Beispiel zur Hochgeschwindigkeitsbearbeitung eine sich drehende Spindelwelle und ein Wellengehäuse zur Lagerung der Spindelwelle aufweisen. Aufgrund der hohen Drehzahlen der Spindelwelle erwärmen sich die Spindelwelle und auch das Wellengehäuse. Daher ist das Wellengehäuse der Spindelwelle mit einer Kühlung ausgestattet, welche jedoch in der Regel nicht ausreicht, um die Wärme vollständig abzuführen. Der im Betrieb unvermeidliche Wärmeeintrag auf die in der Spindelwelle eingespannte Werkzeugaufnahme und das darin befestigte Werkzeug führt zu thermisch bedingten Mess- und Bearbeitungsfehlern. Bei einem Wechsel einer Werkzeugaufnahme hat diese zunächst Umgebungstemperatur, ebenso ein darin angeordnetes Werkzeug, wie z. B. ein Messtaster. Die aus dem Wärmeeintrag in die Spindelwelle resultierende Erwärmung führt dazu, dass sich die Werkzeugaufnahme und das Werkzeug längen. Wird nun ein Werkstück mit dem Messtaster in Antastrichtung "Z" angefahren, dann berührt der erwärmte Messtaster das Werkstück früher, als es bei einem nicht erwärmten Messtaster der Fall wäre. Dadurch wird der Messtaster vorzeitig ausgelenkt. Dies hat zur Folge, dass ein "Ausgelenkt"-Signal früher als es korrekt wäre (ggf. über einen Empfänger) an eine (numerische) Maschinensteuerung der Werkstückbearbeitungsmaschine gesendet und dort empfangen wird. Zum Zeitpunkt des "Ausgelenkt"-Signals wird von der Maschinensteuerung die IstPosition der Z-Achse am maschineninternen Messsystem ausgelesen. Diese Position weicht um dasselbe Maß vom korrekten Wert ab, um welches der Messtaster gelängt ist. Diese Fehlmessung entspricht also dem Maß der thermisch induzierten Längung des Messtasters.

Keine dieser Anordnungen berücksichtigt aus Temperaturschwankungen resultierende Dimensionsänderungen des Messtasters.

Aus der DE 10 2007 043 030 A1 ist eine Werkzeugaufnahme sowie ein Messtaster mit einer Werkzeugaufnahme bekannt. Die Werkzeugaufnahme dient zur Anbringung eines Messtasters an einer Werkzeugmaschine mit einer Schnittstelle. Die Werkzeugaufnahme hat, von der Schnittstelle für die Spindel aus betrachtet, einen Materialabschnitt, der sich vom üblichen Grundmaterial einer Werkzeugaufnahme durch einen kleineren Längenausdehnungskoeffizienten oder eine kleinere Wärmeleitfähigkeit unterscheidet. So wird ein unerwünscht großer Wärmeeintrag in die Werkzeugaufnahme vermieden, so dass eine Wärmeausdehnung vergleichsweise gering bleibt. Damit soll eine Dimensionsänderung durch Wärmeausdehnung auf ein noch tolerierbares Maß reduziert werden. Dabei wird durch Lage, Dimensionierung und Materialauswahl des Materialabschnitts eine Wärmeausdehnung der Werkzeugaufnahme von der Schnittstelle bis zu einem Werkzeug bei üblichen Temperaturverhältnissen an Motorspindeln nach dem Einsetzen einer Werkzeugaufnahme reduziert. Der Materialabschnitt kann dabei die komplette Werkzeugaufnahme bis z. B. zu einem Messtaster umfassen, sodass die Werkzeugaufnahme vollständig aus einem Werkstoff mit einem kleineren Längenausdehnungskoeffizient / einer kleineren Wärmeleitfähigkeit gebildet ist. Ein Wärmeeintrag in einen Bereich nach dem Materialabschnitt z. B. in einen Messtaster und in den Materialabschnitt soll so deutlich verzögert sein. Allerdings können Temperaturschwankungen aus der Umgebung der Werkzeugmaschine, z. B. dem Arbeitsraum eines Bearbeitungszentrums, welche ebenfalls den Messtaster/das Werkzeug in seiner Länge verändern, nicht kompensiert werden. Außerdem dauert es bei diesem Konzept relativ lange, bis nach einem Wechsel des Messtasters / des Werkzeugs thermisch stabile Verhältnisse eingetreten sind.

Aus dem Stand der Technik, wie z.B. aus der US 2012/004886 A1, sind Messtaster bekannt, die zur Erfassung der Temperaturschwankungen zusätzlich einen Temperatursensor aufweisen. Es sind weiterhin Vorrichtungen bekannt, die mittels derart bereitgestellter Temperatursensoren eine Temperaturkompensation ermöglichen, um Messfehler durch temperaturinduzierte Längungen von Vorrichtungskomponenten zu minimieren.

Aus der US 2005/166413 A1 ist ein CMM-Roboterarm bekannt, der eine Temperaturkompensation von Armsegmenten ermöglicht. Der Roboterarm umfasst ein Exoskelett mit mehreren Armsegmenten an dessen Ende ein Messeinsatzsegment angeordnet ist. Dabei sind Thermoelemente an Gehäuseteilen der Armsegmente angeordnet, um eine Temperaturkompensation des Roboterarms, im Speziellen zur Temperaturkompensation der Armsegmente, zu ermöglichen.

Durch die WO 2008/027588 A2 ist weiterhin ein CCM-Sensorsystem bekannt, welches eine Temperaturkompensation eines zu messenden Werkstücks ermöglicht. Dabei werden Messfehler bedingt durch eine temperaturinduzierte Längung des Werkstücks minimiert. In einer Ausführungsform umfasst das CCM-Sensorsystem eine Messsonde, welche gleichzeitig Geometrie- und Temperaturmessdaten an Messpunkten des Werkstücks erfasst, um daraufhin eine Temperaturkompensation des Werkstücks zu ermöglichen.

Aus der US 2010/325907 A1 ist eine CMM (coordinate measurement machine) mit Schwingungsdetektorvorrichtung bekannt, die eine Temperaturkompensation des Tastsensors ermöglicht. Die offenbarte CMM umfasst einen Messarm, an dessen Ende ein abnehmbarer Tastsensor bereitgestellt ist. Der Tastsensor weist dabei einen Tastkopf und die Schwingungsdetektorvorrichtung auf, wobei letztere dazu eingerichtet ist, eine Berührung des Tastkopfes mit einem Messobjekt mittels einer Schwingungsnachweismethode festzustellen. In einer Ausführungsform weist der Tastsensor weitere Module auf, die eine Temperaturkompensation des Tastsensors ermöglichen. Dazu umfasst der Tastsensor weiterhin einen Prozessor, ein Speichermedium und einen Temperatursensor. Der Prozessor ist dabei zum Auslesen von Informationen der übrigen Module und zum Weiterleiten dieser Informationen an die CMM bereitgestellt. Das Speichermedium ist dazu eingerichtet, thermische Kennwerte des Tastsensors, wie z.B. Wärmeausdehnungskoeffizient, temperaturabhängige Referenzmaße, etc., bereitzustellen. In dieser Ausführungsform ermöglicht die CMM auf Grundlage der Temperaturmessdaten und des tastsensorspezifischen Wärmausdehnungskoeffizienten eine Berechnung der Längung des Tastsensors, um daraufhin eine Temperaturkompensation durchzuführen.

Das Dokument US 2012/0029857 A1 offenbart eine Vermessungsvorrichtung, welche einen Messtaster mit einer Mehrzahl von zugeordneten Temperatursensoren aufweist. Temperaturbedingte Abweichungen eines Vermessungsergebnisses werden mit Hilfe von gewonnen Temperaturmessdaten der Temperatursensoren durch eine externe Steuerung ermittelt.

Schließlich offenbart die US 2002/0104227 A1 einen Messtaster mit einem Kompensationsmechanismus für temperaturbedingte Veränderungen einer Messtastererfassung. Insbesondere offenbart das Dokument an unterschiedlichen Stellen des Messtasters angeordnete Dehnungsstreifen, welche sich bei einem Anstieg einer Temperatur ausdehnen.

Das nachveröffentlichte Dokument EP 2 629 048 A2 offenbart einen Messtaster mit integrierter Verknüpfungseinrichtung. Die Verknüpfungseinrichtung kann hierbei wenigstens einen Temperatursensor aufweisen, welcher der Verknüpfungseinrichtung Temperaturmessdaten zur Verfügung stellt. Die im Folgenden vorgestellte Erfindung ist von der Offenbarung des Dokuments EP 2 629 048 A2 dadurch abgegrenzt, dass wenigstens einer der zu implementierenden Temperatursensoren nicht Bestandteil der Verknüpfungseinrichtung ist.

### Zugrundeliegendes Problem

Ziel der hier vorgestellten Temperaturkompensation ist es, die temperaturinduzierte Längenänderung des Messtasters so zu berücksichtigen, dass durch Temperaturänderungen bedingte Messfehler auf ein Minimum reduziert werden.

### Lösung

Die Aufgabe der Erfindung wird mit der Merkmalskombination des unabhängigen Anspruchs 1 gelöst. Vorteilhafte Weiterbildungen der Erfindung sind Gegenstand der abhängigen Ansprüche.

Die vorgeschlagene Temperaturkompensation für einen in einer Werkstückbearbeitungsmaschine aufzunehmenden Messtaster sieht einen berührend oder berührungslos messenden Messtaster zum Erfassen von Messwerten an einem Werkstück und zum Ausgeben für die Messwerte repräsentativer Signale vor. Der Messtaster umfasst eine Tasteinrichtung zur ein- oder mehrdimensionalen Antastung eines Werkstücks, wenigstens einen Antastsensor zum Umsetzen solcher Antastungen in die repräsentativen Signale, wenigstens einen Temperatursensor, der in dem Messtaster aufgenommen ist, um ein für die Temperatur des Messtasters repräsentatives Signal zu erzeugen, und eine Verknüpfungseinrichtung. Die Verknüpfungseinrichtung ist dazu eingerichtet, Signale des Antastsensors mit den Signalen des Temperatursensors zu einem temperaturkompensierten Antastsignal zu verknüpfen und das temperaturkompensierte Antastsignal von dem Messtaster an eine numerische Steuerung der Werkstückbearbeitungsmaschine auszugeben. Der wenigstens eine Temperatursensor ist hierbei nicht Bestandteil der Verknüpfungseinrichtung.

Unter einem Messtaster ist hier sowohl ein Werkzeugabtaster als auch ein Werkstückabtaster verstanden. Unter Temperatur des Messtasters ist hier die Temperatur verstanden, welche sich durch Wärmestrahlung aus der Umgebung des Messtasters, als auch durch Wärmeleitung aus mit dem Messtaster mechanisch verbundenen Komponenten in dem Messtaster, als auch durch Erwärmung des Messtasters aus dessen Umgebung über Konvektion ergibt. Unter einem Messwert wird hier sowohl ein binäres Schaltsignal "0", "1" als auch ein analoges Messergebnis, z.B. "0,000"... "10,000", verstanden, wobei die Art der Codierung, also zum Beispiel als Spannungs- oder Stromwert, oder als digital codierte Impulsfolge unerheblich ist. Ebenso wird hier unter einem Werkstück je nach Messaufgabe sowohl ein Werkzeug, als auch ein Werkstück verstanden. Außerdem kann der Messtaster dazu eingerichtet sein, entweder direkt oder zum Beispiel drahtlos über eine Empfangsschnittstelle des Messtasters mit einer numerischen Steuerung der Werkstückbearbeitungsmaschine zu kommunizieren.

Diese hier vorgestellte Temperaturkompensation hat den Vorteil, dass der numerischen Steuerung der Werkstückbearbeitungsmaschine bereits ein temperaturkompensiertes Antastsignal bereitgestellt wird. Somit liefert der Messtaster ein Antastsignal, das für sich genommen unmittelbar in der numerischen Steuerung weiterverarbeitet werden kann, ohne dass dort auch noch eine zum Beispiel arithmetische Temperaturkompensation des Antastsignals erfolgen müsste. Das Antastsignal kann damit in einem standardisierten Datenprotokoll übertragen werden. Außerdem muss kein separates Temperaturwertsignal an die numerische Steuerung übertragen werden. So ist der solcherart temperaturkompensierte Messtaster zusammen mit den unterschiedlichsten numerischen Steuerungen direkt einsetzbar. Allerdings sind auch Varianten vorgesehen, bei denen anstelle oder zusätzlich ein oder mehrere Dehnungsmessstreifen an dem Messtaster angebracht sind, um eine temperaturbedingte Längung des Messtasters an repräsentativer Stelle zu messen und dieses Messergebnis an die numerische Steuerung der Werkstückbearbeitungsmaschine zur Verrechnung zu senden. Die jeweiligen Messergebnisse können auch durch eine vorherige Kalibrierung in Längenänderungen umgesetzt werden.

Unter einer Antastung ist hier jegliche Relativbewegung zwischen dem Messtaster und einem Werkstück verstanden, die ggf. einen Übergang im Antastsignal zwischen "nicht angetastet" und "angetastet" oder umgekehrt hervorruft.

In einer Variante des temperaturkompensierten Messtasters sind mehrere Temperatursensoren in dem Messtaster aufgenommen, deren Signale in der Verknüpfungseinrichtung mit den Signalen des Antastsensors verknüpft werden. Damit können unterschiedliche Bauabschnitte des Messtasters und deren Materialien / temperaturbedingten Eigenschaften (Wärmeleitfähigkeit, Wärmeausdehnungskoeffizient) zur noch präziseren Temperaturkompensation des Antastsignals berücksichtigt werden, als dies mit nur einem Temperatursensor möglich wäre. Mit nur einem Temperatursensor wird die Temperatur des Messtasters an einer durch Versuche gefundenen Position erfasst. Die an dieser Stelle ermittelte Temperatur ist dann repräsentativ für die Temperatur des gesamten Messtasters. Dabei wird ausgenutzt, dass es während der Erwärmungsphase des Messtasters in diesem Orte gibt, deren Temperatur über der vom Temperatursensor gemessenen Temperatur liegt und Orte, deren Temperatur unter der vom Temperatursensor erfassten Temperatur liegt. Durch den Einsatz von zwei oder mehrerer Temperatursensoren kann die Temperaturverteilung im Messtaster exakter ermittelt werden. Somit kann auch eine exaktere Temperaturkompensation des Messtasters durchgeführt werden.

In einer weiteren Variante des temperaturkompensierten Messtasters werden die (nicht temperaturkompensierten) Signale des Antastsensors mit den Signalen des Temperatursensors zum Beispiel in der Verknüpfungseinrichtung zu einem temperaturkompensierten Antastsignal in der Weise verknüpft, dass ein Signal des Antastsensors in Abhängigkeit von der Temperatur, welche das Signal des / jedes Temperatursensors wiedergibt, zeitverzögert als temperaturkompensiertes Antastsignal ausgegeben wird. Insbesondere, wenn die Antastgeschwindigkeit des Messtasters in der Messrichtung (X-/Y-Richtung oder Z-Richtung) und ggf. die Laufzeit des (nicht temperaturkompensierten) Antastsignals vom Messtaster zu der numerischen Steuerung bekannt sind, lässt sich das Maß der Verzögerung der Übertragung des Antastsignals bezogen auf die Temperaturänderung des Messtasters festlegen.

Wenn sich zum Beispiel der Messtaster pro 1 K Temperaturanstieg um 1 µm längt, und die relative Antastgeschwindigkeit zwischen Werkstück und Messtaster 40 mm/s beträgt, wird gemäß der hier vorgestellten Temperaturkompensation pro 1 K Temperaturanstieg die Übertragung des Antastsignals an die numerische Steuerung um 25 µs verzögert. Da das Antastsignal bei der numerischen Steuerung um 25 µs verzögert ankommt, reagiert diese entsprechend verzögert. Dadurch bewegt sich der Messtaster in der Antastrichtung um genau die Weglänge 1 µm weiter, um die der Messtaster durch den Temperaturanstieg von 1 K gelängt ist. Dies kann durch die Wegerfassung der Werkstückbearbeitungsmaschine erfasst und in der numerischen Steuerung der Werkstückbearbeitungsmaschine verarbeitet werden. Im Ergebnis hat so die Längung des Messtasters auf Verarbeitung und die Steuerung der Werkstückbearbeitungsmaschine keinen - die Bearbeitungsgenauigkeit des Werkstücks verringernden - Einfluss.

In einer anderen Variante des temperaturkompensierten Messtasters werden die (nicht temperaturkompensierten) Signale des Antastsensors mit den Signalen des/ jedes Temperatursensors zum Beispiel in der Verknüpfungseinrichtung zu einem temperaturkompensierten Antastsignal in der Weise verknüpft, dass in einem (analog wegabhängigen) Signal des Antastsensors eine Schaltschwelle (= Übergang zwischen "nicht angetastet" und "angetastet") in Abhängigkeit von der Temperatur verändert wird, welche das Signal des/jedes Temperatursensors wiedergibt, so dass das Signal des Antastsensors als temperaturkompensiertes Antastsignal ausgegeben wird. Dabei wird die Schaltschwelle in Abhängigkeit der Temperatur (sowie ggf. der Messrichtung (X-/Y-Richtung oder Z-Richtung) des Messtasters) verändert. Auf diese Weise wird der Schaltzeitpunkt so verschoben, wie es sich aus der temperaturbedingten Längenänderung und der (konstanten) Antastgeschwindigkeit des Messtasters ergibt. Ein weiterer Vorteil dieser Variante ist, dass die Kompensation des Z-Antastsignals von der Antastgeschwindigkeit unabhängig ist. Hierbei kann zur Unterscheidung oder Erkennung der Antastrichtung nicht die Antastgeschwindigkeit genutzt werden.

In einer weiteren Variante des temperaturkompensierten Messtasters verknüpft die Verknüpfungseinrichtung die Signale des wenigstens einen Antastsensors mit den Signalen des/jedes Temperatursensors zu einem temperaturkompensierten Antastsignal in einer Weise, dass die Signale des / jedes Temperatursensors gemäß einer hinterlegten Funktion nach Zeit, Verlauf, und/oder Betrag verändert werden und eine entsprechende Schaltschwelle an den wenigstens einen Antastsensor vorgegeben wird.

In einer Variante des temperaturkompensierten Messtasters hat der Messtaster ein Gehäuse, in dem ein ringförmiges Stützlager ausgebildet ist, das eine X, Y - Lagerebene und eine dazu normale zentrale Z-Achse des Messtasters definiert. Ein Tragkörper hat ein ringförmiges Gegenlager, durch das eine Längsachse des Tragkörpers definiert ist. Eine Feder ist zwischen dem Gehäuse und dem Tragkörper eingespannt und bestrebt, letzteren in einer Ruhelage zu halten, in der das Gegenlager am Stützlager anliegt und die Längsachse des Tragkörpers mit der zentralen Achse Z des Messtasters zumindest annähernd übereinstimmt. Eine Taststiftaufnahme ist am Tragkörper zentral angeordnet um einen Taststift aufzunehmen. Alternativ kann die Taststiftaufnahme auch fester Bestandteil des Tragkörpers sein, so dass die Taststiftaufnahme nicht relativ zu dem Tragkörper verschiebbar ist. Ein Übertragungsglied ist im Gehäuse entlang der zentralen Z-Achse verschiebbar geführt um beliebige Auslenkungen des Tragkörpers aus seiner Ruhelage in geradlinige Bewegungen umzusetzen. Dabei kann das Übertragungsglied mit dem Tragkörper über ein Kugelgelenk verbunden sein. Die Bewegung des Übertragungsgliedes ist dabei nicht exakt geradlinig entlang der Z-Achse; vielmehr führt das Übertragungsglied bei Auslenkungen in der X, Y - Lagerebene des Messtasters eine Art Taumelbewegung aus.

Der Antastsensor setzt solche Bewegungen des Übertragungsgliedes in die Signale um. Ein Ende des Übertragungsgliedes ist an der Taststiftaufnahme mittig angeordnet und nur ein an das andere Ende angrenzender Abschnitt ist in Richtung der zentralen Achse Z geführt. Das Übertragungsglied ist an einer Stelle des Tragkörpers angeordnet, die vom Antastsensor aus betrachtet jenseits der Lagerebene liegt.

Der Antastsensor kann dabei Teil einer Lichtschranke mit wegabhängig analogem Messsignal, oder ein binär schaltender Sensor sein. Die Taststiftaufnahme kann entlang der Längsachse des Tragkörpers an diesem verschiebbar geführt und in Richtung auf eine durch einen Anschlag definierte Normalstellung federnd vorgespannt sein. Bei einem solchen Messtaster ist ein Bewegungsrichtungsdetektor vorgesehen, der zumindest dazu eingerichtet ist, Relativbewegungen zwischen dem Messtaster und einem Werkstück entlang der zentralen Z-Achse des Messtasters von Bewegungen in der X, Y - Lagerebene des Messtasters zu unterscheiden und dies wiedergebende Signale an die Verknüpfungseinrichtung abzugeben. Die Verknüpfungseinrichtung ist dazu eingerichtet, bei Relativbewegungen zwischen dem Messtaster und einem Werkstück entlang der zentralen Z-Achse des Messtasters temperaturkompensierte Antastsignale auszugeben und bei Relativbewegungen zwischen dem Messtaster und einem Werkstück entlang der zentralen Z-Achse des Messtasters in der X, Y - Lagerebene des Messtasters temperatur-unkompensierte Signale des Antastsensors auszugeben.

Ein mehrdimensionaler Messtaster ist sowohl für Antastungen bei Messungen in Z - Richtung als auch für seitliche Messungen in X und Y- Richtung nutzbar. Während die Erwärmung den Messtaster aufgrund seines Aufbaus und seiner Proportionen in erster Linie (in Z-Richtung) längt, bleibt die Tastkugel exakt in der zentralen Z-Achse des Messtasters. Das heißt, (temperaturbedingte) Längenänderungen des Messtasters beeinflussen in erster Näherung nicht die Richtigkeit / Genauigkeit von Messungen in X, Y - Richtung. Die Temperaturkompensation darf also bei X-, Y-Antastungen nicht erfolgen. Das Messwerk eines Messtasters besteht aus einem festen Teil, welcher fest mit dem Gehäuse des Messtasters verbunden ist und die Lagerung für den beweglichen Teil verkörpert, und aus einem beweglichen Teil. Letzterer wird mittels Federkraft in einer stabilen Ruhelage im festen Teil gehalten. Der bewegliche Teil nimmt den Taststift auf. Wird die Tastkugel des Taststifts bei Kontakt mit dem Werkstück ausgelenkt, dann wird die damit verbundene Bewegung des beweglichen Messwerkteiles von einem geeigneten Sensor aufgenommen und von der Geräteelektronik ausgewertet. Bei den meisten Messtastern, die in Werkzeugmaschinen eingesetzt werden bedingt die Gestalt des beweglichen Messwerkteiles, dass sich die Signaländerung am Sensor bei einer Auslenkung in Z-Richtung schneller vollzieht als bei einer Auslenkung in X, Y-Richtung. Hierbei gilt, dass die von der Maschine benutzten Antastgeschwindigkeiten für alle Richtungen (X, Y, und Z) identisch sind. Somit kann der Bewegungsrichtungsdetektor eine hohe Signaländerungsrate der wegabhängig analogen Messsignale des Antastsensors als Relativbewegungen zwischen dem Messtaster und einem Werkstück entlang der zentralen Z-Achse des Messtasters werten und (bei vergleichbarer Antastgeschwindigkeit) eine vergleichsweise niedrige Signaländerungsrate der wegabhängig analogen Messsignale des Antastsensors als Relativbewegungen zwischen dem Messtaster und einem Werkstück in der X, Y - Lagerebene des Messtasters werten.

In einer anderen Variante des temperaturkompensierten Messtasters sind mehrere Bewegungsrichtungssensoren für die unterschiedlichen Bewegungsrichtungen der Relativbewegungen zwischen dem Messtaster und einem Werkstück vorgesehen, durch deren mechanische Anordnung und Orientierung erreicht ist, dass nur bei einem der Z-Richtung zugeordneten Bewegungsrichtungssensor ein die Temperaturkompensation aktivierendes Signal an die Verknüpfungseinrichtung ausgegeben wird.

In einer weiteren Variante des temperaturkompensierten Messtasters sind Beschleunigungssensoren vorgesehen, um die unterschiedlichen Bewegungsrichtungen des Messtasters zu erfassen. Durch deren mechanische Anordnung und Orientierung ist erreicht, dass nur bei einem der Z-Richtung zugeordneten Bewegungsrichtungssensor ein die Temperaturkompensation aktivierendes Signal an die Verknüpfungseinrichtung ausgegeben wird. Diese Variante eines temperaturkompensierten Messtasters hat ein Messwerk mit mehreren Sensoren für die unterschiedlichen Bewegungsrichtungen. Durch die entsprechende mechanische Anordnung der Sensoren zu den Bewegungsrichtungen führt eine Relativbewegung zwischen dem Messtaster und einem Werkstück mit einer Z-Bewegungskomponente nur bei dem der Z-Richtung zugeordneten Sensor zu einer Signaländerung.

In einer weiteren Variante kann das Messwerk mechanisch auch so aufgebaut sein, dass den unterschiedlichen Auslenkrichtungen eigene Antastsensoren zugeordnet sind um die unterschiedlichen Bewegungsrichtungen der Relativbewegungen zwischen dem Messtaster und einem Werkstück zu erfassen. Durch deren mechanische Anordnung und Orientierung ist erreicht, dass bei einer solchen Variante nur das Signal des der Z-Richtung zugeordneten Antastsensors temperaturkompensiert werden muss. Dazu kann basierend auf dem Signal des der Z-Richtung zugeordneten Antastsensors ein aktivierendes Signal an die Verknüpfungseinrichtung ausgegeben werden. Alternativ dazu wird nur das Signal des der Z-Richtung zugeordneten Antastsensors hinsichtlich der Temperatur kompensiert. Der Bewegungsrichtungsensor kann damit entfallen oder dient eben nur dazu, die Kompensation nur bei Signalen des der Z-Richtung zugeordneten Sensors zuzuschalten.

In einer anderen Variante des temperaturkompensierten Messtasters übermittelt die numerische Steuerung der Werkstückbearbeitungsmaschine dem Messtaster über eine Datenschnittstelle zu Beginn jeder Messbewegung die Bewegungsrichtung, so dass bei Bewegungen entlang der Z-Achse die Temperaturkompensation durch die Verknüpfungseinrichtung zu aktivieren ist.

Eine weitere Variante des temperaturkompensierten Messtasters hat mehrere, zum Beispiel drei oder vier (oder mehr) Antastsensoren, zum Beispiel in Form von Dehnungsmessstreifen (DMS) oder Piezo-Sensoren. Diese bilden jeweils einen eigenen Antastsensor. Jede Auslenkrichtung bewirkt hier eine Signaländerung eines, zweier, dreier, etc. oder aller Antastsensoren. Durch Auswertung der Antastsensoren-Signale sind sowohl die Auslenkrichtung im Raum als auch der Betrag der Auslenkung bestimmbar. Auch hier wird nur das Signal des der Z-Richtung zugeordneten Sensors temperaturkompensiert.

Bei einer anderen Variante sind Sensoren vorgesehen, um die unterschiedlichen Bewegungsrichtungen von Relativbewegungen zwischen dem Messtaster und einem Werkstück zu erfassen und eine Antastung unter einem zur XY-Ebene geneigten Antastwinkel α im X Y Z Raum auszuwerten. Dabei wird ein festgestellter Gesamtmesswert proportional zum Z-Anteil kompensiert, indem zum Beispiel ein Gesamtmesswert in eine Messwertkomponente in der Z-Richtung und eine Messwertkomponente in der X-Richtung und/oder der Y-Richtung zerlegt wird. Eine für die Temperaturlängung des Messtasters repräsentative Verzögerungszeit wird mit einer Funktion (zum Beispiel dem Sinus) des Antastwinkels in der Verknüpfungseinrichtung verarbeitet (zum Bespiel multipliziert und dann ausgegeben).

Bei einem temperaturkompensierten Messtaster kann der Antastwinkel aus der Maschinensteuerung an den Messtaster übertragen werden, bevor der Messtaster an ein Werkstück antastet, oder eine Auswertung von Signalen aus in dem Messtaster angeordneten Bewegungsrichtungsdetektoren liefert den Antastwinkel wiedergebende Signale an die Verknüpfungseinrichtung, oder ein zum Beispiel mittig in einer Tastmechanik angeordneter Sensor liefert ein Signal zur Ermittlung der axial auftretenden Kraft an die Verknüpfungseinrichtung.

Ein derartiger temperaturkompensierter Messtaster kann zur Bestimmung des Antastwinkels sowohl die Signaländerungsgeschwindigkeit im Antastsensor als auch eine im Schaft der Tasteinrichtung oder im Tragkörper mit einem oder mehreren Sensoren gemessene Antastkraft in der Verknüpfungseinrichtung auswerten.

Zur Bestimmung des Antastwinkels können an mehreren Stellen des Tragkörpers oder an dessen Auflager im Gehäuse des Messtasters Sensoren angeordnet sein, die dazu eingerichtet sind, bei Antasten des Messtasters an ein Werkstück auftretenden Kraftverläufe an die Verknüpfungseinrichtung zu liefern.

Eine andere Variante des Messtasters hat mehrere Sensoren in dem Messtaster, die jeweils für die unterschiedlichen Bewegungsrichtungen der Relativbewegungen zwischen dem Messtaster und einem Werkstück vorgesehen sind. Diese Sensoren geben durch ihre mechanische Anordnung und Orientierung bei Auslenkung jeweils ein unterschiedliches Signal ab. Auf der Basis dieser Signale kann dann in der Verknüpfungseinrichtung ein Auslenkvektor ermittelt werden, der den Auslenkwinkel wiedergibt. Die Verzögerungsdauer eines Antast-Schaltsignals wird dann in der Verknüpfungseinrichtung mit dem Sinus des Antastwinkels zur Temperaturkompensation multipliziert.

Eine andere Variante des temperaturkompensierten Messtasters hat mehrere Antastsensoren für die unterschiedlichen Bewegungsrichtungen der Relativbewegungen zwischen dem Messtaster und einem Werkstück. Durch die mechanische Anordnung und Orientierung der Antastsensoren ist erreicht, dass nur durch einen der Z-Richtung zugeordneten Antastsensor ein die Temperaturkompensation aktivierendes Signal an die Verknüpfungseinrichtung ausgegeben wird. Alternativ oder zusätzlich kann auch nur das Signal des der Z-Richtung zugeordneten Antastsensors temperaturkompensiert werden.

In einer anderen Variante des temperaturkompensierten Messtasters ist der Verknüpfungseinrichtung eine dem Messtaster übermittelte Bewegungsrichtung mittels eines Schalters manuell vorzugeben. Alternativ dazu kann der Verknüpfungseinrichtung die Bewegungsrichtung des Messtasters auch durch die numerische Steuerung der Werkstückbearbeitungsmaschine vorzugeben sein. Je nach Maschinenkonzept kann entweder der Messtaster sich gegenüber dem ortsfesten Werkstück bewegen oder der Messtaster kann stehen und das Werkstück wird über eine Tischbewegung zum Messtaster hin bewegt.

Schließlich kann eine Temperaturkompensation eines Messtasters auch dadurch erfolgen, dass der Messtaster über eine Datenschnittstelle einer numerischen Steuerung einer Werkstückbearbeitungsmaschine zu Beginn einer jeden Messbewegung oder in zeitlichen Abständen einen Temperatur- oder Längenkorrekturwert übermittelt, den die numerische Steuerung bei Messungen entlang der Z-Achse die Temperaturkompensation mit dem über ein Wegmesssystem der Werkstückbearbeitungsmaschine ermittelten Positionswert verrechnet. Dabei kann die numerische Steuerung der Werkstückbearbeitungsmaschine bei Antastungen im Raum, also bei von 0° oder 90° zu einer oder mehrerer Achsen abweichender Antastrichtung, auch die Komponente in Z-Richtung anteilig verrechnen.

Ein auf der hier vorgestellten Vorgehensweise beruhendes Verfahren zur Temperaturkompensation eines Messtasters, der in einer Werkstückbearbeitungsmaschine aufzunehmen ist, umfasst die Schritte:
Antasten eines Werkstücks mittels einer Tasteinrichtung des Messtasters;
Umsetzen solcher Antastungen in Signale mittels wenigstens eines Antastsensors des Messtasters;
Erzeugen eines für die Temperatur des Messtasters repräsentatives Signal mittels wenigstens eines Temperatursensors, der dem Messtaster zugeordnet ist; und
Verknüpfen der Signale des wenigstens einen Antastsensors mit den Signalen des Temperatursensors zu einem temperaturkompensierten Antastsignal des Messtasters, das dazu bestimmt ist, an eine numerische Steuerung der Werkstückbearbeitungsmaschine ausgegeben zu werden.

Bei einer Variante dieses Verfahrens können Signale mehrerer dem Messtaster zugeordneter Temperatursensoren in der Verknüpfungseinrichtung mit den Signalen des wenigstens einen Antastsensors zu einem temperaturkompensierten Antastsignal des Messtasters verknüpft werden.

Weiterhin können bei diesem Verfahren die Signale des wenigstens einen Antastsensors mit den Signalen des / jedes Temperatursensors zu einem temperaturkompensierten Antastsignal in einer Weise verknüpft werden, dass ein Signal des Antastsensors in Abhängigkeit von der Temperatur, welche das Signal des/jedes Temperatursensors wiedergibt, zeitverzögert als temperaturkompensiertes Antastsignal des Messtasters ausgegeben wird, und / oder die Signale des wenigstens einen Antastsensors mit den Signalen des/jedes Temperatursensors zu einem temperaturkompensierten Antastsignal in einer Weise verknüpft werden, dass eine Schaltschwelle eines Signals des Antastsensors in Abhängigkeit von der Temperatur, welche das Signal des/jedes Temperatursensors wiedergibt, verändert wird, so dass das Signal des wenigstens einen Antastsensors als temperaturkompensiertes Antastsignal des Messtasters ausgegeben wird, und / oder die Signale des wenigstens einen Antastsensors mit den Signalen des/jedes Temperatursensors zu einem temperaturkompensierten Antastsignal in einer Weise werden, dass die Signale des/jedes Temperatursensors gemäß einer hinterlegten Funktion nach Zeit, Verlauf, und/oder Betrag verändert werden und eine entsprechende Schaltschwelle an den wenigstens einen Antastsensors des Messtasters vorgegeben wird.

Zu diesem Verfahren kann ein Bewegungsrichtungsdetektor eingesetzt werden, der (i) zumindest Relativbewegungen zwischen Messtaster und Werkstück entlang der zentralen Z-Achse des Messtasters von Relativbewegungen zwischen Messtaster und Werkstück in der X, Y - Lagerebene des Messtasters unterscheidet und (ii) dies wiedergebende Richtungssignale an die Verknüpfungseinrichtung abgibt, und wobei die Verknüpfungseinrichtung bei Relativbewegungen zwischen Messtaster und Werkstück entlang der zentralen Z-Achse des Messtasters temperaturkompensierte Antastsignale ausgibt und bei Relativbewegungen zwischen Messtaster und Werkstück in der X, Y - Lagerebene des Messtasters temperatur-unkompensierte Signale des wenigstens einen Antastsensors ausgibt.

Bei diesem Verfahren kann der Bewegungsrichtungsdetektor die Richtungssignale aus der Signaländerungsrate des wegabhängig analogen Messsignals ermitteln und bei Relativbewegungen zwischen Messtaster und Werkstück entlang der zentralen Z-Achse temperaturkompensierte Antastsignale ausgeben und bei Relativbewegungen zwischen Messtaster und Werkstück in der X, Y - Lagerebene des Messtasters temperatur-unkompensierte Signale des wenigstens einen Antastsensors ausgeben, und / oder der Bewegungsrichtungsdetektor kann eine hohe Signaländerungsrate des wegabhängig analogen Messsignals des wenigstens einen Antastsensors als Relativbewegungen zwischen Messtaster und Werkstück entlang der zentralen Z-Achse werten und eine vergleichsweise niedrige Signaländerungsrate des wegabhängig analogen Messsignals des wenigstens einen Antastsensors als Relativbewegungen zwischen Messtaster und Werkstück in der X, Y - Lagerebene werten, und / oder mehrere Bewegungsrichtungssensoren für die unterschiedlichen Relativbewegungen zwischen Messtaster und Werkstück durch deren mechanische Anordnung und Orientierung können erreichen, dass nur bei einem der Z-Richtung zugeordneten Bewegungsrichtungssensor ein die Temperaturkompensation aktivierendes Signal an die Verknüpfungseinrichtung ausgegeben wird.

Bei diesem Verfahren oder Varianten davon können Beschleunigungssensoren die unterschiedlichen Richtungen der Relativbewegungen zwischen Messtaster und Werkstück erfassen und durch deren mechanische Anordnung und Orientierung erreichen, dass nur bei einem der Z-Richtung zugeordneten Bewegungsrichtungssensor ein die Temperaturkompensation aktivierendes Signal an die Verknüpfungseinrichtung ausgegeben wird.

Bei diesem Verfahren oder Varianten davon kann der Verknüpfungseinrichtung die dem Messtaster übermittelte Bewegungsrichtung der Relativbewegungen zwischen Messtaster und Werkstück mittels eines Schalters manuell vorgegeben werden, und / oder der Verknüpfungseinrichtung die dem Messtaster übermittelte Bewegungsrichtung der Relativbewegungen zwischen Messtaster und Werkstück durch die numerische Steuerung der Werkstückbearbeitungsmaschine vorgegeben werden.

Bei diesem Verfahren oder Varianten davon kann die numerische Steuerung der Werkstückbearbeitungsmaschine dem Messtaster über eine Datenschnittstelle zu Beginn jeder Messbewegung die Richtung der Relativbewegungen zwischen Messtaster und Werkstück übermitteln, so dass bei Relativbewegungen zwischen Messtaster und Werkstück entlang der Z-Achse des Messtasters die Temperaturkompensation durch die Verknüpfungseinrichtung zu aktivieren ist, und / oder der Messtaster über eine Datenschnittstelle einer numerischen Steuerung einer Werkstückbearbeitungsmaschine zu Beginn einer jeden Messbewegung oder in zeitlichen Abständen einen Temperatur- oder Längenkorrekturwert übermitteln, den die numerische Steuerung bei Messungen entlang der Z-Achse das Temperaturkompensationssignal mit dem über ein Wegmesssystem der Werkstückbearbeitungsmaschine ermittelten Positionswert verrechnet.

Eine weitere Variante der Temperaturkompensation verwendet Sensor-Signale, um die unterschiedlichen Bewegungsrichtungen von Relativbewegungen zwischen dem Messtaster und einem Werkstück zu erfassen und eine Antastung unter einem zur XY-Ebene geneigten Antastwinkel α im X Y Z Raum auszuwerten, wobei ein festgestellter Gesamtmesswert proportional zum Z-Anteil kompensiert wird, indem eine Verzögerungszeit mit einer Funktion des Antastwinkels a in der Verknüpfungseinrichtung zu verarbeiten ist.

Dabei kann (i) der Antastwinkel α aus der Maschinensteuerung an den Messtaster übertragen werden, bevor der Messtaster an ein Werkstück antastet, oder (ii) Signale aus in dem Messtaster angeordneten Bewegungsrichtungsdetektoren den Antastwinkel a wiedergeben, die der Verknüpfungseinrichtung zugeführt werden, oder (iii) ein Signal aus einem der Tasteinrichtung zugeordneten Sensor zur Ermittlung der axial auftretenden Kraft der Verknüpfungseinrichtung zugeführt werden.

Insbesondere kann auch die Temperaturkompensation zur Bestimmung des Antastwinkels α sowohl die Signaländerungsgeschwindigkeit im Antastsensor als auch eine im Schaft der Tasteinrichtung TE oder im Tragkörper mit einem oder mehreren Sensoren gemessene Antastkraft in der Verknüpfungseinrichtung ausgewertet werden.

Zur Bestimmung des Antastwinkels α können Signale herangezogen werden, die aus an mehreren Stellen des Tragkörpers oder an dessen Auflager im Gehäuse des Messtasters angeordneten Sensoren stammen, die dazu eingerichtet sind, bei Antasten des Messtasters an ein Werkstück auftretende Kraftverläufe an die Verknüpfungseinrichtung zu liefern.

Dabei können mehrere Sensoren in dem Messtaster für die unterschiedlichen Bewegungsrichtungen der Relativbewegungen zwischen dem Messtaster und einem Werkstück vorgesehen sein, die durch ihre mechanische Anordnung und Orientierung bei Auslenkung alle jeweils ein Signal abgeben, auf deren Basis in der Verknüpfungseinrichtung der Auslenkwinkel α ermittelt wird, und wobei die Verzögerung eines Antast-Schaltsignals mit dem Sinus des Antastwinkels α zur Temperaturkompensation multipliziert wird.

### Kurzbeschreibung der Zeichnung

Weitere Ziele, Merkmale, Vorteile und Anwendungsmöglichkeiten ergeben sich aus der nachfolgenden Beschreibung einiger Ausführungsbeispiele und zugehöriger Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen.
Fig. 1 zeigt ein Flussdiagramm einer hier vorgestellten Verfahrensvariante.

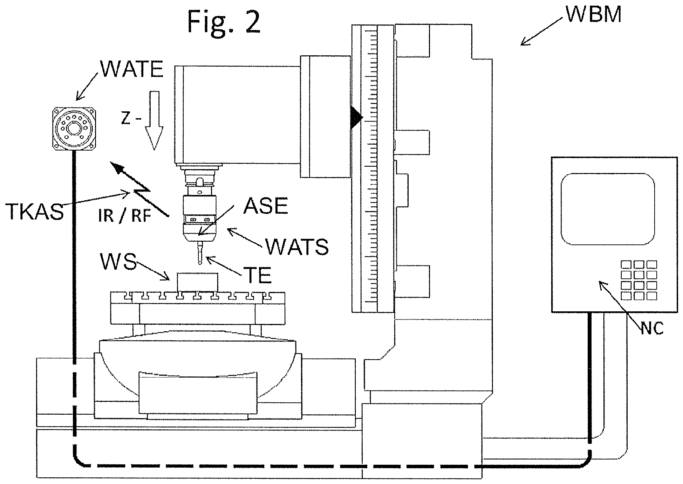

Fig. 2 zeigt schematisch eine Werkzeugmaschine, die mit einer Maschinensteuerung gekoppelt ist, welche dazu eingerichtet ist, von einem Messtaster Signale zu empfangen und ggf. diesem auch Signale zu senden.
Fig. 3 und 4 zeigen wie die Signale jedes Antastsensors mit den Signalen jedes Temperatursensors zu einem temperaturkompensierten Antastsignal verknüpft werden.
Fig. 5 und 6 zeigen Messtaster schematisch im Längsschnitt in unterschiedlicher Längung und in unterschiedlichen Antastsituationen.
Fig. 7 zeigt die geometrischen Verhältnisse bei einem Messtaster, der an ein Werkstück in einer beliebigen X Y Z - Richtung antastet.
Fig. 8 zeigt ein Diagramm, in dem der Einfluss der Längenänderung des Messtasters auf das Messergebnis in Abhängigkeit des Antastwinkels α und die Signaländerungsgeschwindigkeit in Abhängigkeit des Antastwinkels α veranschaulicht ist.
Fig. 9 zeigt ein Schnittbild einer Variante eines Messtasters mit zwei von insgesamt vier am Tragkörper angeordneten, sich jeweils paarweise gegenüberliegenden Piezosensoren.

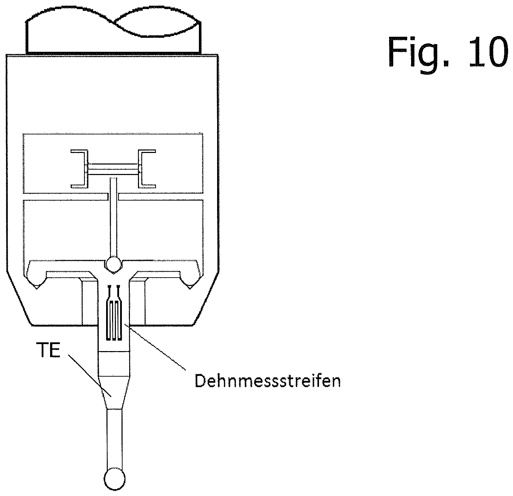

Fig. 10 zeigt ein Schnittbild einer Variante eines Messtasters mit einem im Schaft des Tragkörpers angeordneten Sensor, hier in der speziellen Gestalt eines Dehnmessstreifens.

### Detaillierte Beschreibung

Ein in einer Werkstückbearbeitungsmaschine aufzunehmender, berührend oder berührungslos messender temperaturkompensierter Messtaster dient zum Erfassen von Messwerten an einem Werkstück und zum Ausgeben für die Messwerte repräsentativer Signale.

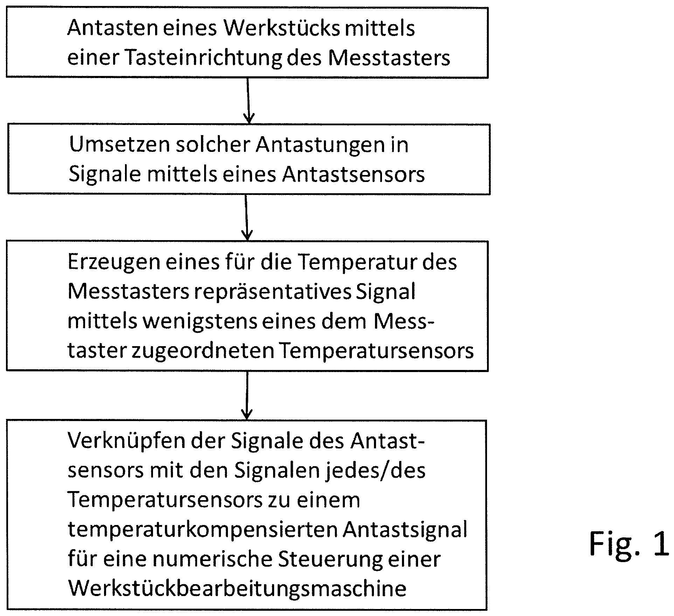

Wie in Fig. 1 veranschaulicht, dient eine Tasteinrichtung des Messtasters zur ein- oder mehrdimensionalen Antastung eines Werkstücks. Diese Tasteinrichtung steuert einen Antastsensor zum Umsetzen solcher Antastungen in Signale an. Ein dem Messtaster zugeordneter Temperatursensor erzeugt ein für die Temperatur des Messtasters repräsentatives Signal. In einer Verknüpfungseinrichtung werden die Signale des Antastsensors mit den Signalen des Temperatursensors dann zu einem temperaturkompensierten Antastsignal verknüpft, das dazu bestimmt ist, an eine numerische Steuerung der Werkstückbearbeitungsmaschine ausgegeben zu werden, wenn die Antastung entlang der Z(entral)-Achse des Messtasters erfolgt. Ansonsten wird das unkompensierte Signal des Antastsensors an die numerische Steuerung der Werkstückbearbeitungsmaschine ausgegeben.

In einer Verfahrensvariante werden Signale mehrerer dem Messtaster zugeordneter Temperatursensoren in der Verknüpfungseinrichtung mit den Signalen des Antastsensors zu einem temperaturkompensierten Antastsignal verknüpft.

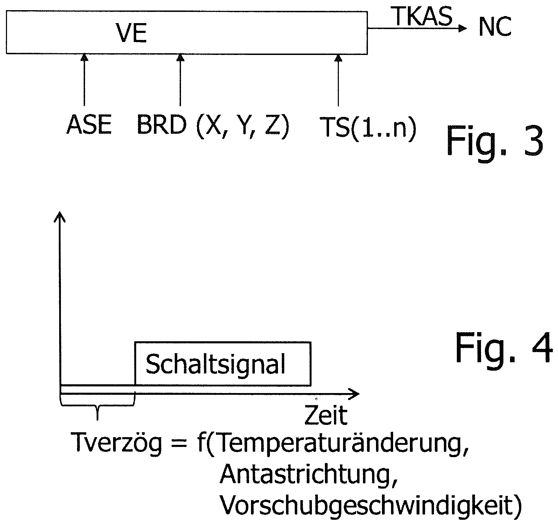

Dabei werden die Signale des/jedes Antastsensors mit den Signalen des / jedes Temperatursensors zu einem temperaturkompensierten Antastsignal in der Weise verknüpft, dass ein Signal des Antastsensors in Abhängigkeit von der Temperatur, welche das Signal des / jedes Temperatursensors wiedergibt, zeitverzögert als temperaturkompensiertes Antastsignal ausgegeben wird. Alternativ dazu können die Signale des/jedes Antastsensors mit den Signalen des / jedes Temperatursensors und einem aus dem / den Temperatursignal(en) generierten Temperaturgradienten zu einem temperaturkompensierten Antastsignal in der Weise verknüpft werden, dass ein Signal des Antastsensors in Abhängigkeit von der Temperatur, welche das Signal des / jedes Temperatursensors wiedergibt, zeitverzögert als temperaturkompensiertes Antastsignal ausgegeben wird. Dies wird auch in den Fig. 3, 4 veranschaulicht.

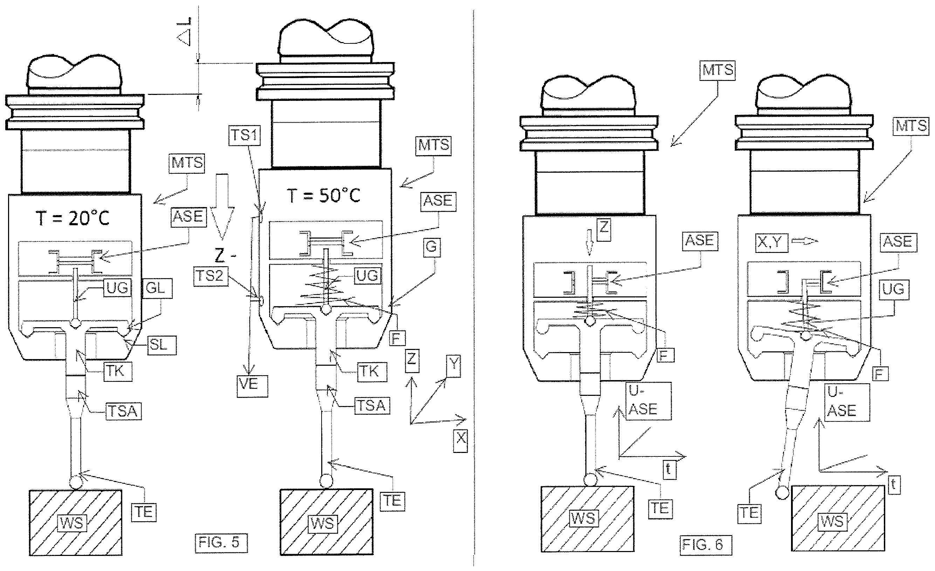

Zur Temperaturkompensation eines analoge Signale ausgebenden Messtasters (siehe z. B. auch Fig. 5, 6) können die Signale des/jedes Antastsensors ASE mit den Signalen des/jedes Temperatursensors TS1..n zu einem temperaturkompensierten Antastsignal TKAS in einer Weise verknüpft werden, dass eine Schaltschwelle eines Signals des Antastsensors ASE in Abhängigkeit von der Temperatur, welche das Signal des/ jedes Temperatursensors TS1..n wiedergibt, verändert wird, so dass das Signal des Antastsensors ASE als temperaturkompensiertes Antastsignal TKAS ausgegeben wird. Dabei hat jeder Antastsensor ASE einen Infrarot (IR) oder Funksender (RF) WATS, dessen Signale einen Empfänger WATE empfang und an eine Maschinen NC übertragen werden.

Ein Bewegungsrichtungsdetektor BRD kann zumindest Relativbewegungen zwischen dem Messtaster und einem Werkstück entlang der zentralen Z-Achse des Messtasters von der Relativbewegungen zwischen dem Messtaster und einem Werkstück in der X, Y - Lagerebene unterscheiden und dies wiedergebende Richtungssignale an die Verknüpfungseinrichtung VE abgeben (siehe Fig. 3) Die Verknüpfungseinrichtung VE ist eine Logikschaltung oder ein Microcontroller. Diese Verknüpfungseinrichtung VE ist dazu eingerichtet und bestimmt, bei Relativbewegungen zwischen dem Messtaster und einem Werkstück entlang der zentralen Z-Achse des Messtasters temperaturkompensierte Antastsignale TKAS auszugeben und bei Relativbewegungen zwischen dem Messtaster und einem Werkstück in der X, Y - Lagerebene des Messtasters temperatur-unkompensierte Signale des Antastsensors ASE auszugeben.

Der Bewegungsrichtungsdetektor BRD kann dabei die Richtungssignale aus der Signaländerungsrate des wegabhängig analogen Messsignals ermitteln und die Richtungssignale an die Verknüpfungseinrichtung VE abgeben. Bei Relativbewegungen zwischen dem Messtaster und einem Werkstück entlang der zentralen Z-Achse des Messtasters gibt die Verknüpfungseinrichtung VE temperaturkompensierte Antastsignale TKAS aus und bei Relativbewegungen zwischen dem Messtaster und einem Werkstück in der X, Y - Lagerebene des Messtasters gibt die Verknüpfungseinrichtung VE temperatur-unkompensierte Signale des Antastsensors ASE aus.

Wie veranschaulicht, wertet der Bewegungsrichtungsdetektor BRD eine hohe Signaländerungsrate des wegabhängig analogen Messsignals des Antastsensors ASE als Relativbewegungen zwischen dem Messtaster und einem Werkstück entlang der zentralen Z-Achse des Messtasters. Eine vergleichsweise niedrige Signaländerungsrate des wegabhängig analogen Messsignals des Antastsensors ASE wird als Relativbewegung zwischen dem Messtaster und einem Werkstück in der X, Y - Lagerebene des Messtasters gewertet.

Bei den vorstehend dargestellten Varianten unterscheidet die Sensorik im Taster zwischen Messungen bei Antastungen in seitlichen XY-Richtungen und Antastungen in axialer Z-Richtung. Da sich eine temperaturbedingte Ausdehnung des Messtasters nur auf die Messungen in Z-Richtung, nicht aber auf Messungen in XY-Richtung auswirkt, werden nur die Antastsignale der Messungen in Z-Richtung zeitverzögert ausgegeben. Bei einer der vorstehend dargestellten Varianten wird die Antastrichtung anhand der Signaländerungsgeschwindigkeit am Sensor unterschieden.

Bei einer Antastung in Z-Richtung haben die Geschwindigkeit des Übertragungsgliedes im Sensor und die Vorschubgeschwindigkeit des Messtatsters in Z-Richtung ein Verhältnis von 1:1. Die Antastgeschwindigkeit in XY-Richtung wird dagegen entsprechend des Hebelverhältnisses des Messwerks (R/L) langsamer an den Sensor gegeben. Anhand der Signaländerungsgeschwindigkeit kann in der nachstehend dargestellten Weise eine Unterscheidung getroffen werden, ob es sich um eine axiale oder um seitliche Antastung handelt.

Bei den oben beschriebenen Lösungen wird der Messtaster nur für Antastungen in Richtung der Hauptachsen X, Y, oder Z eingesetzt. Schräge Antastungen in der XY-Ebene sind damit auch möglich, da sich die Signaländerungsgeschwindigkeit bei rotationssymmetrischen Messwerken der hier offenbarten Varianten nicht von einer Antastung exakt in X- oder Y-Richtung unterscheidet. Antastungen unter in einer zur XY-Ebene geneigten Richtung (0° < α < 90°) sind dabei jedoch nicht vorgesehen.

Nachstehend wird eine richtungsabhängige Temperatur-Kompensation erläutert, die es erlaubt, mit dem Messtaster auch Antastungen im X Y Z Raum auszuführen, welche die Z-Achse anteilig berücksichtigt. Dabei wird ein gemessener Wert proportional zum Z-Anteil kompensiert, wobei die Sensorik einen Gesamtmesswert in eine Messwertkomponente in der Z-Richtung und eine Messwertkomponente in der X-Richtung und/oder der Y-Richtung aufteilt und diese beiden Komponenten ggf. voneinander abgrenzt.

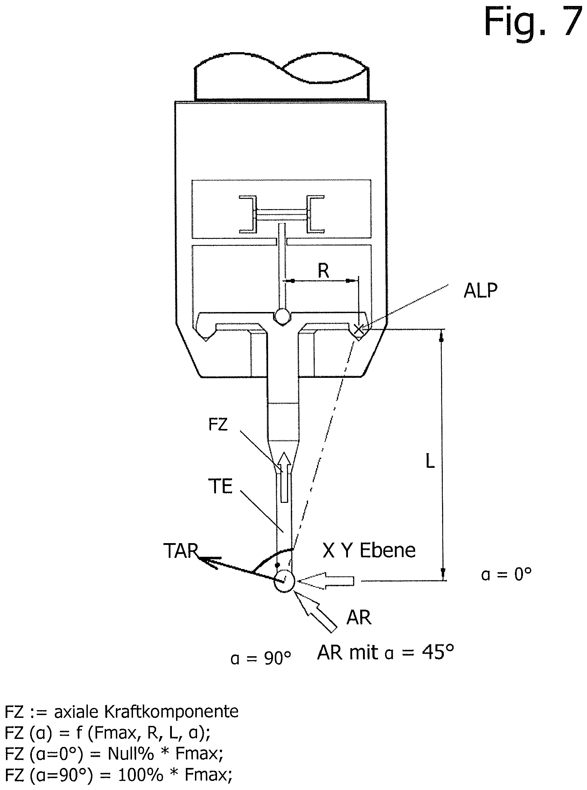

Bei Messwerkvarianten der vorstehend beschriebenen Art wird der Tragkörper in der Ruhelage durch eine Federkraft in sein Gegenlager gedrückt. Bei einer XY-Antastung kippt der Tragkörper um einen Auflagerpunkt ALP. Dieser Auflagerpunkt ALP befindet sich am äußeren Bereich des Tragkörpers. Die geometrischen Verhältnisse sind hierzu in Fig. 7 veranschaulicht. Hier ist exemplarisch eine Antastung mit einem Antastwinkel a = 45° zur XY-Ebene dargestellt. Abhängig vom Radius R des Auflagerpunktes ALP des Tragkörpers von der Mittellängsachse der Tasteinrichtung TE sowie einer effektiven Länge L der Tasteinrichtung TE wird die Spitze der Tasteinrichtung TE in einer tatsächlichen Auslenkrichtung TAR ausgelenkt, die von der Antastrichtung AR abweicht.

Sofern sich die Antastungen auf Richtungen exakt in der X Y - Ebene oder in der Z-Richtung beschränken, kann durch diese Kinematik anhand der Signaländerungsgeschwindigkeit die Antastrichtung abgeleitet werden. Bei diesen bisher implementierten Antastungen beträgt der Antastwinkel stets 0° oder 90° zu einer der X-, Y-, oder Z- Hauptachsen. In diesen Fällen kann die Signaländerungsgeschwindigkeit als kleiner oder größer als ein definierter Schwellenwert erkannt und demzufolge ausgewertet werden.

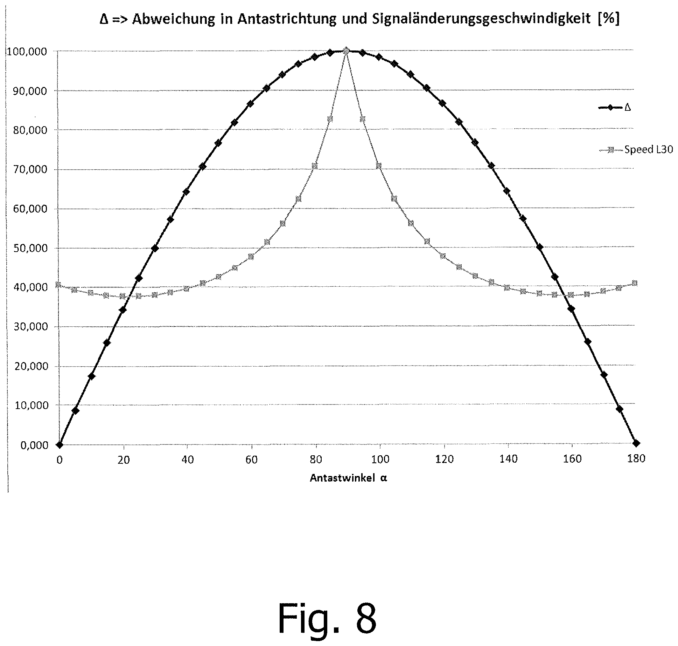

Bei einem beliebigen Antastwinkel a, 0° < α < 90°, zu einer der X-, Y-, oder Z- Hauptachsen ist eine eindeutige Erkennung und anschließende Auswertung jedoch nicht möglich. Dies wird anhand des Diagramms in Fig. 8 verdeutlicht.

In dem Diagramm von Fig. 8 ist im Einzelnen der Einfluss der (temperaturinduzierten) Längenänderung des Messtasters auf das Messergebnis in Abhängigkeit des Antastwinkels a zur X Y-Ebene oder zur Z-Richtung und die Signaländerungsgeschwindigkeit in Abhängigkeit des Antastwinkels α (hier mit beispielhafter Länge L des Tasteinsatzes von 30 mm) veranschaulicht. Ersichtlich erlaubt die Signaländerungsgeschwindigkeit keine eindeutige Zuordnung oder Bestimmung des Antastwinkels.

Eine temperaturbedingte Längenänderung des Messtasters ΔL_temp geht abhängig vom Antastwinkel wie folgt in das Messergebnis ein: Messfehler = ΔL_temp ^{∗} sin a.

Bei einer Kompensation durch verzögerte Schaltsignalausgabe ist daher die berechnete Verzögerungszeit noch mit sin (Antastwinkel) zu multiplizieren. Diese Art der Kompensation ist zum Beispiel bei einer Variante des temperaturkompensierten Messtasters einzusetzen, bei der die nicht temperaturkompensierten Signale des Antastsensors mit den Signalen des Temperatursensors zum Beispiel in der Verknüpfungseinrichtung zu einem temperaturkompensierten Antastsignal in der Weise verknüpft werden, dass ein Signal des Antastsensors in Abhängigkeit von der Temperatur, welche das Signal des / jedes Temperatursensors wiedergibt, zeitverzögert als temperaturkompensiertes Antastsignal ausgegeben wird.

Insbesondere, wenn die Antastgeschwindigkeit des Messtasters (als Vektor betrachtet) in der Messrichtung, also dem Antastwinkel α zur X Y-Ebene oder zur Z-Richtung und ggf. die Laufzeit des (nicht temperaturkompensierten) Antastsignals vom Messtaster zu der numerischen Steuerung bekannt sind, lässt sich so das Maß der Verzögerung der Übertragung des Antastsignals bezogen auf die Temperaturänderung des Messtasters und den Antastwinkel festlegen.

Damit sind auch Antastungen mit beliebigem Antastwinkel a, 0° < α < 90°, zu einer der X-, Y-, oder Z- Hauptachsen temperaturkompensiert möglich. Um dies zu implementieren, wird nachstehend erläutert, wie zum Beispiel die Varianten der oben beschriebenen Verknüpfungseinrichtung VE zu erweitern sind, damit ein Messtaster über die Information verfügt, unter welchem Antastwinkel α momentan eine Antastung erfolgt. Insbesondere ist dies mit Varianten möglich, bei denen (i) der Antastwinkel α aus der Maschinensteuerung an den Messtaster übertragen wird, bevor der Messtaster an ein Werkstück antastet, oder (ii) Signale aus in dem Messtaster angeordneten Bewegungsrichtungsdetektoren BRD den Antastwinkel α wiedergeben, die der Verknüpfungseinrichtung VE zugeführt werden, oder bei denen (iii) ein Signal aus einem der Tasteinrichtung TE zugeordneten Sensor zur Ermittlung der axial auftretenden Kraft der Verknüpfungseinrichtung VE zugeführt wird.

Wenn die Maschinensteuerung an den Messtaster den Antastwinkel a (drahtlos oder drahtgebunden) überträgt, kann die oben beschriebene Verknüpfungseinrichtung VE die berechnete Verzögerungszeit mit sin α multiplizieren, um so die Schaltpunktverzögerung festzulegen.

In einer weiteren Variante liefert ein der Tasteinrichtung TE zugeordneter Sensor (zum Beispiel ein Piezo-Sensor oder Dehnmessstreifen DMS, der in oder an der Tasteinrichtung TE angeordnet ist) ein Signal zur Ermittlung der axial auftretenden Kraft an die Verknüpfungseinrichtung VE. Die axiale Kraftkomponente FZ (a) in Z-Richtung längs der Mittellängsachse der Tasteinrichtung TE ist bei α = 0° gleich Null und erreicht Fmax = 100% bei α = 90°. Die axiale Kraftkomponente FZ (a) wird bestimmt vom Hebelverhältnis (R / L) und dem jeweiligen Auslenkwinkel: FZ (a) = f (Fmax, R, L, α).

Bei einer Antastung in der X Y - Ebene, also bei Antastwinkel a = 0°, liefert dieser Sensor keine Signaländerung an die Verknüpfungseinrichtung VE. Er könnte deshalb nicht zur Schaltpunktdetektion verwendet werden. Daher ist zusätzlich ein Sensor am Ende der Tasteinrichtung TE ist erforderlich, der das Ereignis einer Antastung detektiert.

In dieser Variante werden die Signale des Antastsensors mit den Signalen des/der Temperatursensoren und des Kraftsensors zu einem temperaturkompensierten Antastsignal in der Verknüpfungseinrichtung VE verknüpft. Dazu kann in einer Variante zum Beispiel ein Dehnmessstreifen die Kraftkomponente FZ in der Tasteinrichtung TE des Tragkörpers erfassen und an die Verknüpfungseinrichtung VE liefern.

Alternativ dazu wird in einer anderen Variante zur Bestimmung des Antastwinkels a sowohl die Signaländerungsgeschwindigkeit im Antastsensor als auch eine im Schaft der Tasteinrichtung TE oder im Tragkörper gemessene Antastkraft in der Verknüpfungseinrichtung VE ausgewertet. Die Verknüpfung dieser beiden Signale in der Verknüpfungseinrichtung VE verringert mögliche Fehler bei der Berechnung des Antastwinkels a.

Bei einer weiteren Alternative werden an mehreren, zum Beispiel drei oder vier, Stellen des Tragkörpers oder an dessen Auflager im Gehäuse des Messtasters mittels entsprechenden Sensoren (zum Beispiel Dehnmessstreifen DMS oder Piezo-Sensoren) die bei Antasten des Messtasters an ein Werkstück auftretenden Kraftverläufe in der Verknüpfungseinrichtung VE ermittelt. Dabei können die Auslenkkräfte entweder direkt innerhalb des zweigeteilten Tragkörpers oder indirekt im Auflagerbereich im Gehäuse des Messtasters bestimmt werden. Durch Auswertung der Kraft-Signale / der Antastsensoren-Signale in der Verknüpfungseinrichtung VE sind sowohl die Auslenkrichtung im Raum als auch der Betrag der Auslenkung bestimmbar. Hieraus kann der Antastwinkel α berechnet werden, so dass die Verzögerung des Schaltsignals mit dem Sinus des Antastwinkels α zur Temperaturkompensation in der Verknüpfungseinrichtung VE multipliziert werden kann. Dabei kann der Betrag der Auslenkung durch die verknüpfte Auswertung der Kraftsensoren-Signale und der Antastsensoren-Signale ermittelt werden, wobei die Kraftsensoren-Signale die Richtung und die Antastsensoren-Signale den Betrag liefern.

Anhand der Auswertung der mehreren (zum Beispiel drei oder vier) DMS- oder Piezosignalwerte kann die Auslenkrichtung in der Verknüpfungseinrichtung VE genau ermittelt werden. Auch eine Antastung in XY-Richtung (Antastwinkel α = 0°) verändert die Signalwerte. Deshalb kann in einer Variante das Schaltsignal ausschließlich auf Basis der Auswertung der Signalwerte aus den Sensoren (Dehnmessstreifen DMS oder Piezo-Sensoren) in der Verknüpfungseinrichtung VE generiert werden. Damit kann in dieser Variante das Übertragungsglied mit dem entsprechenden Sensor entfallen.

Ein Messwerk mit Piezo-Sensorik ist an sich zum Beispiel aus der US 4,972,594 oder der US 6,090,205 bekannt.

Weiter oben ist eine Variante beschrieben, bei der der Messtaster mehrere Antastsensoren für die unterschiedlichen Bewegungsrichtungen der Relativbewegungen zwischen dem Messtaster und einem Werkstück hat, wobei durch die mechanische Anordnung und Orientierung der Antastsensoren erreicht wird, dass nur durch einen der Z-Richtung zugeordneten Antastsensor ein die Temperaturkompensation aktivierendes Signal an die Verknüpfungseinrichtung ausgegeben wird, oder auch nur das Signal des der Z-Richtung zugeordneten Antastsensors temperaturkompensiert wird.

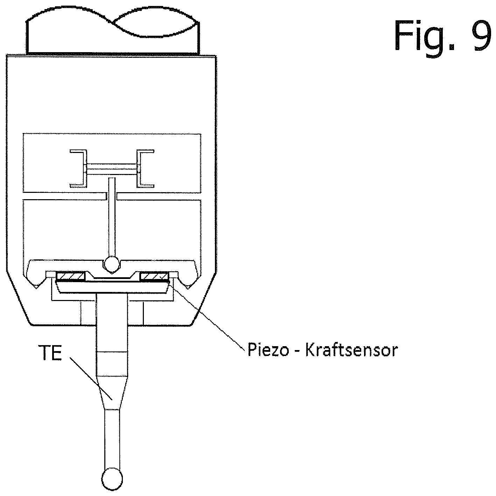

Diese Variante kann dadurch noch effizienter realisiert werden, dass mehrere, zum Beispiel drei oder vier Sensoren in dem Messtaster für die unterschiedlichen Bewegungsrichtungen der Relativbewegungen zwischen dem Messtaster und einem Werkstück vorgesehen werden, die durch ihre mechanische Anordnung und Orientierung bei Auslenkung alle jeweils ein Signal abgeben. Auf Basis dieser Signale wird in der Verknüpfungseinrichtung VE ein Auslenkvektor errechnet. Dieser Auslenkvektor gibt den Auslenkwinkel α im X Y Z - Raum wieder. Damit kann in der Verknüpfungseinrichtung VE die Verzögerung des Schaltsignals mit dem Sinus des Antastwinkels α zur Temperaturkompensation multipliziert werden. Eine diese Variante veranschaulichende Darstellung ist Fig. 9 mit einem Schnittbild des Messtasters mit zwei von insgesamt vier am Tragkörper angeordneten, sich jeweils paarweise gegenüberliegenden Piezosensoren.

Bei einem binär schaltenden Messtaster, oder bei einem sich nach außen (auch) wie ein binär schaltender Messtaster verhaltender Messtaster, oder bei einem Messtaster mit binär schaltendem Antastsensor ist aus dem Schaltsignal keine Information über die Antastrichtung ermittelbar. In einer Variante bewirken daher in dem Messtaster mehrere Bewegungsrichtungssensoren für die unterschiedlichen Bewegungsrichtungen der Relativbewegungen zwischen dem Messtaster und einem Werkstück durch deren mechanische Anordnung und Orientierung, dass nur bei einem der Z-Richtung zugeordneten Bewegungsrichtungssensor ein die Temperaturkompensation aktivierendes Signal an die Verknüpfungseinrichtung VE ausgegeben wird. In einer Alternative dieser Variante erfassen die Beschleunigungssensoren die unterschiedlichen Bewegungsrichtungen der Relativbewegungen zwischen dem Messtaster und einem Werkstück. Durch deren mechanische Anordnung und Orientierung wird erreicht, dass nur bei einem der Z-Richtung zugeordneten Bewegungsrichtungssensor ein die Temperaturkompensation aktivierendes Signal an die Verknüpfungseinrichtung VE ausgegeben wird.

Alternativ dazu kann der Verknüpfungseinrichtung VE die Bewegungsrichtung der Relativbewegungen zwischen dem Messtaster und einem Werkstück mittels eines nicht weiter veranschaulichten Schalters manuell, oder durch die numerische Steuerung NC der Werkstückbearbeitungsmaschine WBM vorgegeben werden.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematische Darstellungen, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches / welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Lösung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst.

Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. Temperaturkompensierter Messtaster (MTS) zum Erfassen von Messwerten an einem Werkstück (WS) und zum Ausgeben für die Messwerte repräsentativer Signale, wobei der Messtaster (MTS) ein in einer Werkstückbearbeitungsmaschine (WBM) aufzunehmender, berührend oder berührungslos messender Messtaster (MTS) ist und
• eine Tasteinrichtung (TE) zur ein- oder mehrdimensionalen Antastung eines Werkstücks (WS),
• wenigstens einen Antastsensor (ASE) zum Umsetzen solcher Antastungen in Signale,
• wenigstens einen dem Messtaster (MTS) zugeordneter Temperatursensor (TS), der in dem Messtaster (MTS) aufgenommen ist, um ein für die Temperatur des Messtasters (MTS) repräsentatives Signal (T) zu erzeugen, aufweist, **dadurch gekennzeichnet, dass**
• der Messtaster eine Verknüpfungseinrichtung (VE) aufweist, die dazu eingerichtet ist, die Signale des wenigstens einen Antastsensors (ASE) mit den Signalen des wenigstens einen Temperatursensors (TS) zu einem temperaturkompensierten Antastsignal (TKAS) zu verknüpfen, und das temperaturkompensierte Antastsignal (TKAS) des Messtasters von dem Messtaster an eine numerische Steuerung (NC) der Werkstückbearbeitungsmaschine (WBM) auszugeben, wobei der wenigstens eine Temperatursensor (TS) nicht Bestandteil der Verknüpfungseinrichtung (VE) ist.

2. Temperaturkompensierter Messtaster (MTS) nach dem vorherigen Anspruch, wobei mehrere Temperatursensoren (TS1... TSn) dem Messtaster (MTS) zugeordnet sind, deren Signale in der Verknüpfungseinrichtung (VE) mit den Signalen des wenigstens einen Antastsensors (ASE) zu einem temperaturkompensierten Antastsignal (TKAS) verknüpft werden, wobei die mehreren Temperatursensoren (TS1 ... TSn) insbesondere unterschiedliche Bauabschnitte des Messtasters (MTS) erfassen.

3. Temperaturkompensierter Messtaster (MTS) nach einem der vorherigen Ansprüche, wobei die Verknüpfungseinrichtung (VE) dazu eingerichtet ist, Signale des wenigstens einen Antastsensors (ASE) mit den Signalen des / jedes Temperatursensors (TS) zu einem temperaturkompensierten Antastsignal (TKAS) in einer Weise zu verknüpfen, dass
• ein Signal des wenigstens einen Antastsensors (ASE) in Abhängigkeit von der Temperatur, welche das Signal des/jedes Temperatursensors (TS) wiedergibt, und ggf. einer Vorschubgeschwindigkeit des Messtasters (MTS) beim Antasten zeitverzögert als temperaturkompensiertes Antastsignal (TKAS) ausgegeben wird, und / oder
• eine Schaltschwelle eines Signals des wenigstens einen Antastsensors (ASE) in Abhängigkeit von der Temperatur, welche das Signal des/jedes Temperatursensors (TS) wiedergibt, verändert wird, so dass das Signal des Antastsensors (ASE) als temperaturkompensiertes Antastsignal (TKAS) ausgegeben wird, und / oder
• die Signale des/jedes Temperatursensors (TS) gemäß einer hinterlegten Funktion nach Zeit, Verlauf, und/oder Betrag verändert werden und eine entsprechende Schaltschwelle an den wenigstens einen Antastsensor (ASE) vorgegeben wird.

4. Temperaturkompensierter Messtaster (MTS) nach einem der vorherigen Ansprüche, bei dem ein oder mehrere Dehnungsmessstreifen an dem Messtaster (MTS) angebracht sind, um eine temperaturbedingte Längung des Messtasters (MTS) an repräsentativer Stelle zu messen und dieses Messergebnis an die numerische Steuerung (NC) einer Werkstückbearbeitungsmaschine (WBS) zur Verrechnung zu senden, und/oder wobei der Messtaster (MTS) das Signal des/jedes Temperatursensors (TS) zur Bestimmung der temperaturbedingten Längung des Messtasters (MTS) heranzieht um den Wert dieser temperaturbedingten Längung an die numerische Steuerung (NC) der Werkstückbearbeitungsmaschine (WBS) zur Verrechnung zu senden.

5. Temperaturkompensierter Messtaster (MTS) nach einem der vorherigen Ansprüche, wobei der Messtaster (MTS) ein Gehäuse (G) hat, in dem ein ringförmiges Stützlager (SL) ausgebildet ist, das eine X, Y - Lagerebene und eine dazu normale zentrale Z-Achse des Messtasters (MTS) definiert, ein Tragkörper (TK) ein ringförmiges Gegenlager (GL) aufweist, durch das eine Längsachse des Tragkörpers (TK) definiert ist, eine Feder (F) zwischen dem Gehäuse (G) und dem Tragkörper (TK) eingespannt und bestrebt ist, letzteren in einer Ruhelage zu halten, in der das Gegenlager (GL) am Stützlager (SL) anliegt und die Längsachse des Tragkörpers (TK) mit der zentralen Achse Z des Messtasters (MTS) zumindest annähernd übereinstimmt, eine Taststiftaufnahme (TSA) am Tragkörper (TK) zentral angeordnet ist um einen Taststift (TS) aufzunehmen, ein Übertragungsglied (UG) im Gehäuse (G) entlang der zentralen Z-Achse verschiebbar geführt ist um beliebige Auslenkungen des Tragkörpers (TK), hervorgerufen durch eine Relativbewegung zwischen dem Messtaster (MTS) und einem Werkstück, aus seiner Ruhelage in geradlinige Bewegungen umzusetzen, und wenigstens ein Antastsensor (ASE) solche Bewegungen des Übertragungsgliedes in die Signale umsetzt, wobei ein Ende des Übertragungsgliedes (UG) an der Taststiftaufnahme (TSA) mittig angeordnet ist und nur ein an das andere Ende angrenzender Abschnitt in Richtung der zentralen Achse Z geführt ist, wobei das Übertragungsglied (UG) an einer Stelle des Tragkörpers (TK) angeordnet ist, die von dem wenigstens einen Antastsensor (ASE) aus betrachtet jenseits der Lagerebene liegt, wobei der wenigstens eine Antastsensor (ASE) Teil einer Lichtschranke mit wegabhängig analogem Messsignal ist oder einem binären Schaltsignal ist und die Taststiftaufnahme (TSA) an dem Tragkörper (TK) angeordnet oder ein Teil des Tragkörpers (TK) ist und entlang dessen Längsachse verschiebbar geführt und in Richtung auf eine durch einen Anschlag definierte Normalstellung federnd vorgespannt ist.

6. Temperaturkompensierter Messtaster (MTS) nach einem der vorherigen Ansprüche, wobei ein Bewegungsrichtungsdetektor (BRD) vorgesehen ist, der dazu eingerichtet ist, (i) zumindest Relativbewegungen zwischen dem Messtaster (MTS) und einem Werkstück entlang der zentralen Z-Achse des Messtasters von Bewegungen in der X, Y - Lagerebene zu unterscheiden und (ii) dies wiedergebende Richtungssignale an die Verknüpfungseinrichtung (VE) abzugeben, und wobei die Verknüpfungseinrichtung (VE) dazu eingerichtet ist, bei Relativbewegungen zwischen dem Messtaster (MTS) und einem Werkstück entlang der zentralen Z-Achse des Messtasters temperaturkompensierte Antastsignale (TKAS) auszugeben und bei Relativbewegungen zwischen dem Messtaster (MTS) und einem Werkstück in der X, Y - Lagerebene des Messtasters (MTS) temperatur-unkompensierte Signale des Antastsensors (ASE) auszugeben.

7. Temperaturkompensierter Messtaster (MTS) nach Anspruch 6, wobei der Bewegungsrichtungsdetektor (BRD) dazu eingerichtet ist, die Richtungssignale aus der Signaländerungsrate des wegabhängig analogen Messsignals zu ermitteln und bei Relativbewegungen zwischen dem Messtaster (MTS) und einem Werkstück entlang der zentralen Z-Achse des Messtasters (MTS) temperaturkompensierte Antastsignale (TKAS) auszugeben und bei Relativbewegungen zwischen dem Messtaster (MTS) und einem Werkstück in der X, Y - Lagerebene des Messtasters (MTS) temperatur-unkompensierte Signale des wenigstens einen Antastsensors (ASE) auszugeben, und/oder
wobei der Bewegungsrichtungsdetektor (BRD) eine hohe Signaländerungsrate des wegabhängig analogen Messsignals des Antastsensors (ASE) als Relativbewegung zwischen dem Messtaster (MTS) und einem Werkstück entlang der zentralen Z-Achse des Messtasters (MTS) wertet und eine vergleichsweise niedrige Signaländerungsrate des wegabhängig analogen Messsignals des Antastsensors (ASE) als Relativbewegung zwischen dem Messtaster (MTS) und einem Werkstück in der X, Y - Lagerebene des Messtasters (MTS) wertet.

8. Temperaturkompensierter Messtaster (MTS) nach einem der vorherigen Ansprüche, wobei mehrere Antastsensoren (ASE) für die unterschiedlichen Bewegungsrichtungen der Relativbewegungen zwischen dem Messtaster (MTS) und einem Werkstück vorgesehen sind, wobei durch die mechanische Anordnung und Orientierung der Antastsensoren (ASE) erreicht ist, dass nur durch einen der Z-Richtung zugeordneten Antastsensor (ASE) ein die Temperaturkompensation aktivierendes Signal an die Verknüpfungseinrichtung (VE) ausgegeben wird und/oder nur das Signal des der Z-Richtung zugeordneten Antastsensors (ASE) hinsichtlich der Temperatur zu kompensieren ist.

9. Temperaturkompensierter Messtaster (MTS) nach einem der vorhergehenden Ansprüche, wobei mehrere Beschleunigungssensoren zum Erfassen der unterschiedlichen Bewegungsrichtungen der Relativbewegungen zwischen dem Messtaster (MTS) und einem Werkstück vorgesehen sind, wobei durch die mechanische Anordnung und Orientierung der Beschleunigungssensoren erreicht ist, dass nur bei einem der Z-Richtung zugeordneten Bewegungsrichtungssensor ein die Temperaturkompensation aktivierendes Signal an die Verknüpfungseinrichtung (VE) ausgegeben wird.

10. Temperaturkompensierter Messtaster (MTS) nach einem der vorherigen Ansprüche, wobei Sensoren vorgesehen sind, um die unterschiedlichen Bewegungsrichtungen von Relativbewegungen zwischen dem Messtaster (MTS) und einem Werkstück zu erfassen und eine Antastung unter einem zur XY-Ebene geneigten Antastwinkel (a) im X Y Z Raum auszuwerten, wobei ein festgestellter Gesamtmesswert proportional zum Z-Anteil kompensiert wird, indem eine Verzögerungszeit mit einer Funktion des Antastwinkels (a) in der Verknüpfungseinrichtung (VE) zu verarbeiten ist.

11. Temperaturkompensierter Messtaster (MTS) nach dem vorhergehenden Anspruch, wobei (i) der Antastwinkel (a) aus der Maschinensteuerung an den Messtaster (MTS) übertragen wird, bevor der Messtaster (MTS) an ein Werkstück antastet, oder (ii) Signale aus in dem Messtaster (MTS) angeordneten Bewegungsrichtungsdetektoren (BRD) den Antastwinkel (a) wiedergeben, die der Verknüpfungseinrichtung (VE) zugeführt werden, oder (iii) ein Signal aus einem der Tasteinrichtung (TE) zugeordneten Sensor zur Ermittlung der axial auftretenden Kraft der Verknüpfungseinrichtung (VE) zugeführt wird.

12. Temperaturkompensierter Messtaster (MTS) nach dem vorhergehenden Anspruch, wobei zur Bestimmung des Antastwinkels (a) sowohl die Signaländerungsgeschwindigkeit im Antastsensor (ATS) als auch eine im Schaft der Tasteinrichtung (TE) oder im Tragkörper mit einem oder mehreren Sensoren gemessene Antastkraft in der Verknüpfungseinrichtung (VE) ausgewertet wird.

13. Temperaturkompensierter Messtaster (MTS) nach einem der vorhergehenden Ansprüche, wobei zur Bestimmung des Antastwinkels (a) an mehreren Stellen des Tragkörpers oder an dessen Auflager im Gehäuse des Messtasters (MTS) Sensoren angeordnet sind, die dazu eingerichtet sind, bei Antasten des Messtasters an ein Werkstück auftretenden Kraftverläufe an die Verknüpfungseinrichtung (VE) zu liefern.

14. Temperaturkompensierter Messtaster (MTS) nach einem der vorhergehenden Ansprüche, wobei mehrere Sensoren in dem Messtaster für die unterschiedlichen Bewegungsrichtungen der Relativbewegungen zwischen dem Messtaster (MTS) und einem Werkstück vorgesehen sind, die durch ihre mechanische Anordnung und Orientierung bei Auslenkung alle jeweils ein Signal abgeben, auf deren Basis in der Verknüpfungseinrichtung (VE) der Auslenkwinkel (a) ermittelt wird, und wobei die Verzögerung eines Antast-Schaltsignals mit dem Sinus des Antastwinkels (a) zur Temperaturkompensation multipliziert wird.

15. Temperaturkompensierter Messtaster (MTS) nach einem der vorherigen Ansprüche, wobei der Verknüpfungseinrichtung (VE) die Bewegungsrichtung der Relativbewegungen zwischen dem Messtaster (MTS) und einem Werkstück mittels eines Schalters manuell vorzugeben ist, und/oder
wobei der Verknüpfungseinrichtung (VE) die Bewegungsrichtung der Relativbewegungen zwischen dem Messtaster (MTS) und einem Werkstück durch die numerische Steuerung (NC) der Werkstückbearbeitungsmaschine (WBM) vorzugeben ist.

16. Temperaturkompensierter Messtaster (MTS) nach dem vorherigen Anspruch, wobei die numerische Steuerung (NC) der Werkstückbearbeitungsmaschine (WBM) dem Messtaster (MTS) über eine Datenschnittstelle zu Beginn jeder Messbewegung die Bewegungsrichtung übermittelt, so dass bei einer Relativbewegung zwischen dem Messtaster (MTS) und einem Werkstück entlang der Z-Achse des Messtasters (MTS) die Temperaturkompensation durch die Verknüpfungseinrichtung (VE) zu aktivieren ist.

17. Temperaturkompensierter Messtaster (MTS) nach einem der vorherigen Ansprüche, wobei der Messtaster (MTS) dazu eingerichtet ist, der numerischen Steuerung (NC) der Werkstückbearbeitungsmaschine (WBM) über die Datenschnittstelle zu Beginn einer jeden Messbewegung zwischen dem Messtaster (MTS) und dem Werkstück oder in zeitlichen Abständen einen Temperatur- oder Längenkorrekturwert zu übermitteln, und
die numerische Steuerung (NC) dazu eingerichtet ist, bei Messungen entlang der Z-Achse des Messtasters (MTS) oder bei Messungen entlang einer Antastrichtung, die von der Z-Achse räumlich abweicht, den Temperatur- oder Längenkorrekturwert mit einem über ein Wegmesssystem der Werkstückbearbeitungsmaschine (WBM) ermittelten Positionswert zu verrechnen.

## Claims

1. A temperature-compensated measuring probe (MTS) for acquiring measuring values at a workpiece (WS) and for outputting signals which are representative for the measuring values, wherein the measuring probe (MTS) is a measuring probe (MTS) for measurements with or without contact to be accommodated in a workpiece processing machine (WBM) and comprises
• a probing means (TE) for the one or multi-dimensional contacting of a workpiece (WS),
• at least one contact sensor (ASE) for converting such contacts into signals,
• at least one temperature sensor (TS) which is associated with the measuring probe (MTS) and accommodated in the measuring probe (MTS) in order to generate a signal which is representative for the temperature of the measuring probe (MTS),
**characterised in that**
• the measuring probe comprises a linkage device (VE) which is adapted to link the signals of the least one contact sensor (ASE) with the signals of the at least one temperature sensor (TS) to a temperature-compensated contact signal (TKAS) and to output the temperature-compensated contact signal (TKAS) of the measuring probe to a numerical control (NC) of the workpiece processing machine (WBM), wherein at least one temperature sensor (TS) is not part of the linkage device (VE).

2. The temperature-compensated measuring probe (MTS) according to the previous claim, wherein several temperature sensors (TS1 ... TSn) are associated with the measuring probe (MTS), whose signals are linked in the linkage device (VE) with the signals of the at least one contact sensor (ASE) to a temperature-compensated contact signal (TKAS), wherein the several temperature sensors (TS1 ... TSn) detect in particular different component sections of the measuring probe (MTS).

3. The temperature-compensated measuring probe (MTS) according to any of the previous claims, wherein the linkage device (VE) is adapted to link signals of the at least one contact sensor (ASE) with the signals of the / of each temperature sensor (TS) to a temperature-compensated contact signal (TKAS) in such a manner that
• a signal of the least one contact sensor (ASE) is output time-delayed as temperature-compensated contact signal (TKAS) depending on the temperature which is reflected by the signal of the/each temperature sensor (TS) and, if necessary, on a feed rate of the measuring probe (MTS), and/or
• a switching threshold of a signal of the at least one contact sensor (ASE) is changed depending on the temperature which is reflected by the signal of the/each temperature sensor (TS) so that the signal of the contact sensor (ASE) is output as temperature-compensated contact signal (TKAS), and/or
• the signals of the/of each temperature sensor (TS) are changed for time, course and/or amount according to a stored function and a corresponding switching threshold is defined for the at least one contact sensor (ASE).

4. The temperature-compensated measuring probe (MTS) according to any of the previous claims, wherein one or several strain gauges are attached at the measuring probe (MTS) in order to measure a temperature-related elongation of the measuring probe (MTS) at a representative location and to transmit this measuring result to the numerical control (NC) of a workpiece processing machine (WBM) to include it in the calculation, and/or wherein the measuring probe (MTS) uses the signal of the/of each temperature sensor (TS) for determining the temperature-related elongation in order to transmit the value of this temperature-related elongation to the numerical control (NC) of a workpiece processing machine (WBM) to include it in the calculation.

5. The temperature-compensated measuring probe (MTS) according to any of the previous claims, wherein the measuring probe (MTS) has a housing (G) in which an annular support bearing (SL) is formed which defines an X, Y bearing plane and a central Z axis of the measuring probe (MTS) normal to them, a support body (TK) comprises an annular counter bearing (GL) by which a longitudinal axis of the support body (TK) is defined, a spring is clamped between the housing (G) and the support body (TK), which aims to maintain the latter in a rest position in which the counter bearing (GL) abuts on the support bearing (SL) and the longitudinal axis of the support body (TK) at least approximately coincides with the central axis Z of the measuring probe (MTS), a stylus holder (TSA) is centrally arranged at the support body (TK) for accommodating a stylus (TS), a transmission member (UG) is slidably guided in the housing (G) along the central Z axis in order to convert any deflections of the support body (TK) from its rest position, which are caused by a relative movement between the measuring probe (MTS) and a workpiece, into straight movements, and at least one contact sensor (ASE) converts such movements of the transmission member (UG) into the signals, wherein an end of the transmission member (UG) is centrally arranged at the stylus holder (TSA) and only one portion adjacent to the other end leas in the direction of central Z axis, wherein the transmission member (UG) is arranged at a location of the support body (TK), which is situated beyond the bearing plane when viewed from the at least one contact sensor (ASE), wherein the least one contact sensor (ASE) is part of a light barrier with a path-dependent analog measuring signal or a binary switching signal and the stylus holder (TSA) is arranged at the support body (TK) or is part of the support body (TK) and slidably guided along its longitudinal axis and resiliently biased in the direction of a normal position which is defined by a stop.

6. The temperature-compensated measuring probe (MTS) according to any of the previous claims, wherein a movement direction detector (BRD) is provided which is adapted
(i) to differentiate at least relative movements between the measuring probe (MTS) and a workpiece along the central Z axis of the measuring probe and movements in the Z, Y bearing plane, and
(ii) to output direction signals which reflect this to the linkage device (VE), and wherein the linkage device (VE) is adapted to output temperature-compensated contact signals (TKAS) in the case of relative movements between the measuring probe (MTS) and a workpiece along the central Z axis of the measuring probe and to output temperature non-compensated signals of the contact sensor (ASE) in the case of relative movements between the measuring probe (MTS) and a workpiece in the X, Y bearing plane of the measuring probe (MTS).

7. The temperature-compensated measuring probe (MTS) according to Claim 6, wherein the movement direction detector (BRD) is adapted to determine the signal change rate of the path-dependent analog measuring signal and to output temperature-compensated contact signals (TKAS) in the case of relative movements between the measuring probe (MTS) and a workpiece in the X, Y bearing plane of the measuring probe (MTS), and to output temperature non-compensated contact signal (TKAS) of the at least one contact sensor (ASE) in the case of relative movements between the measuring probe (MTS) and a workpiece in the X, Y bearing plane of the measuring probe (MTS), and/or wherein the movement direction detector (BRD) classifies a high signal change rate of the path-dependent analog measuring signal of the contact sensor (ASE) as a relative movement between the measuring probe (MTS) and a workpiece along the central Z axis of the measuring probe (MTS), and classifies a comparatively low signal change rate of the path-dependent analog measuring signal of the contact sensor (ASE) as a relative movement between the measuring probe (MTS) and a workpiece in the X, Y bearing plane of the measuring probe (MTS).

8. The temperature-compensated measuring probe (MTS) according to any of the previous claims, wherein several contact sensors (ASE) are provided for the different movement directions of the relative movements between the measuring probe (MTS) and a workpiece, wherein the mechanical arrangement and orientation of the contact sensors (ASE) ensure that only one contact sensor (ASE) which is associated with the Z direction outputs a signal to the linkage device (VE), which activates the temperature compensation, and/or only the signal of the contact sensor (ASE) which is associated with the Z direction is to be compensated.

9. The temperature-compensated measuring probe (MTS) according to any of the previous claims, wherein several acceleration sensors are provided for detecting the different movement directions of the relative movements between the measuring probe (MTS) and a workpiece, wherein the mechanical arrangement and orientation of the acceleration sensors ensure that only one movement direction sensor which is associated with the Z direction outputs a signal to the linkage device (VE), which activates the temperature compensation.

10. The temperature-compensated measuring probe (MTS) according to any of the previous claims, wherein sensors are provided for detecting the different movement directions of the relative movements between the measuring probe (MTS) and a workpiece and for evaluating a contact under a contact angle (α) which is inclined to the XY plane in the X Y Z space, wherein a determined total measuring value is compensated proportional to the Z proportion by processing a deceleration time with a function of the contact angle (α) in the linkage device (VE).

11. The temperature-compensated measuring probe (MTS) according to the previous claim, wherein
(i) the contact angle (α) is transmitted from the machine controller to the measuring probe (MTS) before the measuring probe (MTS) contacts a workpiece, or
(ii) signals from the movement direction detectors (BRD) arranged in the measuring probe (MTS) reflect the contact angle (α), which signals are transmitted to the linkage device (VE), or
(iii) a signal from a sensor associated with the probing means (TE) is transmitted to the linkage device (VE) for determining the axially occurring force.

12. The temperature-compensated measuring probe (MTS) according to the previous claim, wherein both the signal change rate in the contact sensor (ATS) as well as a contact force measured in the shaft of the probing means (TE) or in the support body by means of one or several sensors are evaluated in the linkage device (VE).

13. The temperature-compensated measuring probe (MTS) according to any of the previous claims, wherein sensors are arranged at several locations of the support body or its support in the housing of the measuring probe (MTS) for determining the contact angle (α), which are adapted to supply force progressions to the linkage device (VE), which occur when the measuring probe contacts a workpiece.

14. The temperature-compensated measuring probe (MTS) according to any of the previous claims, wherein several sensors in the measuring probe are provided for the different movement directions of the relative movements between the measuring probe (MTS) and a workpiece, all of which when deflected output a signal due to their mechanical arrangement and orientation, on the basis of which the contact angle (α) is determined in the linkage device (VE), and wherein the deceleration of the contact switching signal is multiplied by the sine of the contact angle (α) to compensate for temperature.

15. The temperature-compensated measuring probe (MTS) according to any of the previous claims, wherein the movement direction of the relative movements between the measuring probe (MTS) and a workpiece is to be manually pregiven by means of a switch, and/or
wherein the movement direction of the relative movements between the measuring probe (MTS) and a workpiece is to be pregiven to the linkage device (VE) by the numerical control (NC) of the workpiece processing machine (WBM).

16. The temperature-compensated measuring probe (MTS) according to the previous claim, wherein the numerical control (NC) of the workpiece processing machine (WBM) transmits the movement direction to the measuring probe (MTS) at the beginning of each measuring movement via a data interface, so that the temperature compensation by the linkage device (VE) is to be activated at a relative movement between the measuring probe (MTS) and a workpiece.

17. The temperature-compensated measuring probe (MTS) according to any of the previous claims, wherein the measuring probe (MTS) is adapted to transmit a temperature or length correction value to the numerical control (NC) of the workpiece processing machine (WBM) via the data interface at the beginning of each measuring movement between the measuring probe (MTS) and a workpiece or in time intervals, and
the numerical control (NC) is adapted to combine in the calculation the temperature or length correction value with a position value which is determined via a path measuring system of the workpiece processing machine (WBM) for measurements along the Z axis of the measuring probe (MTS) or for measurements along a contacting direction which spatially deviates from the Z axis.

## Revendications

1. Palpeur de mesure à compensation de température (MTS) pour détecter des valeurs de mesure sur une pièce (WS) et pour émettre des signaux représentatifs pour les valeurs de mesure, le palpeur de mesure (MTS) étant un palpeur de mesure (MTS) mesurant avec ou sans contact, à loger dans une machine d'usinage de pièces (WBM) et présente
- un dispositif de palpage (TE) pour le palpage monodimensionnel ou pluridimensionnel d'une pièce (WS),
- au moins un capteur de palpeur (ASE) pour convertir de tels palpages en signaux,
- au moins un capteur de température (TS) associé au palpeur de mesure (MTS), qui est logé dans le palpeur de mesure (MTS) pour produire un signal représentatif (T) pour la température du palpeur de mesure (MTS), **caractérisé en ce que**
le palpeur de mesure présente un dispositif de mise en relation (VE) qui est conçu pour mettre en relation les signaux dudit capteur de palpeur (ASE) avec les signaux dudit capteur de température (TS) par rapport à un signal de palpage à compensation de température (TKAS), et pour émettre le signal de palpage à compensation de température (TKAS) du palpeur de mesure par le palpeur de mesure dans une commande numérique (NC) de la machine d'usinage de pièces (WBM), ledit capteur de température (TS) n'étant pas un élément constitutif du dispositif de mise en relation (VE).

2. Palpeur de mesure à compensation de température (MTS) selon la revendication précédentes, plusieurs capteurs de température (TS1...TSn) étant associés au palpeur de mesure (MTS), dont les signaux sont mis en relation dans le dispositif de mise en relation (VE) avec les signaux dudit capteur de palpage (ASE) par rapport à un signal de palpage à compensation de température (TKAS), les différents capteurs de température (TS1...TSn) détectant en particulier différents sections d'opération du palpeur de mesure (MTS).

3. Palpeur de mesure à compensation de température (MTS) selon l'une quelconque des revendications précédentes, le dispositif de mise en relation (VE) étant conçu pour mettre en relation des signaux dudit capteur de palpage (ASE) avec les signaux du/ de chaque capteur de température (TS) par rapport au signal de palpage à compensation de température (TKAS) de sorte
- qu'un signal dudit capteur de palpage (ASE) en fonction de la température, que représente le signal du/de chaque capteur de température (TS), et qui éventuellement retarde une vitesse d'avance du palpeur de mesure (MTS) lors du palpage, soit émis en tant que signal à compensation de température (TKAS), et/ou
- qu'un seuil de commutation d'un signal dudit capteur de palpage (ASE) en fonction de la température, qui représente le signal du/ de chaque capteur de température (TS) soit modifié de sorte que le signal du capteur de palpage (ASE) soit émis en tant que signal de palpage à compensation de température (TKAS), et/ou
que les signaux du /de chaque capteur de température (TS) soient modifiés selon une fonction consignée en fonction du temps, de la courbe et/ou de la valeur absolue et qu'un seuil de commutation soit prédéfini sur ledit capteur de palpage (ASE).

4. Palpeur de mesure à compensation de température (MTS) selon l'une quelconque des revendications précédentes, une ou plusieurs barre de mesure de dilatation sont posées sur le palpeur de mesure (MTS) pour mesurer un allongement en fonction de la température, du palpeur de mesure (MTS) à un endroit représentatif et pour envoyer ce résultat de mesure à la commande numérique (NC) de la machine d'usinage de pièces (WBS) pour calcul, et/ou
le palpeur de mesure (MTS) faisant appel au signal du/de chaque capteur de mesure (TS) pour déterminer l'allongement en fonction de la température du palpeur de mesure (MTS) pour envoyer la valeur de cet allongement dû à la température à la commande numérique (NC) de la machine d'usinage de pièces (WBS) pour calcul.

5. Palpeur de mesure à compensation de température (MTS) selon l'une quelconque des revendications précédentes, le palpeur de mesure (MTS) ayant un boîtier (G) dans lequel est conçu un support annulaire (SL) qui définit un plan de support X, Y et un axe Z central normal du palpeur de mesure (MTS), un corps de support (TK) présente une butée annulaire (GL) par laquelle un axe longitudinal du corps de support (TK) est défini, un ressort (F) est tendu entre le boîtier (G) et le corps de support (TK) et s'efforce de maintenir dans une position de repos ces derniers, dans laquelle la butée (GL) repose sur le support (SL) et l'axe longitudinal du corps de support (TK) correspond à l'axe central Z du palpeur de mesure (MTS) au moins approximativement, un logement de palpeur (TSA) est disposé au centre sur le corps de support (TK) pour loger un palpeur (TS), un élément de transfert (UG) est guidé coulissant dans le boîtier (G) le long de l'axe central Z pour convertir des quelconques déformations du corps de support (TK) provoquées par un mouvement relatif entre le palpeur de mesure (MTS) et une pièce, à partir de sa position de repos en des mouvements rectilignes, et au moins un capteur de palpage (ASE) pour convertir de tels mouvements de l'élément de transfert en signaux, une extrémité de l'élément de transfert (UG) étant disposée au centre sur le logement de palpeur (TSA) et uniquement une section adjacente à l'autre extrémité étant guidée en direction de l'axe central Z, l'élément de transfert (UG) étant disposé à un endroit sur le corps de support (TK) qui, observé à partir dudit capteur de palpage (ASE) se trouve au-delà du plan de support, ledit capteur de palpage (ASE) faisant partie d'une barrière lumineuse avec un signal de mesure analogique dépendant de la course ou est un signal de commutation binaire et le logement de palpeur (TSA) est disposé sur le corps de support (TK) ou est une partie du corps de support (TK) et est guidé coulissant le long de son axe longitudinal et précontraint par le ressort dans la direction d'une position normale définie par une butée.

6. Palpeur de mesure à compensation de température (MTS) selon l'une quelconque des revendications précédentes, un détecteur de sens de mouvement (BRD) étant conçu pour distinguer (i) au moins des mouvements relatifs entre le palpeur de mesure (MTS) et une pièce le long de l'axe central Z du palpeur de mesure des mouvements dans le plan de support X, Y et (ii) pour délivrer les signaux de direction les représentants au dispositif de mise en relation (VE), et le dispositif de mise en relation (VE) étant conçu pour délivrer en cas de mouvements relatifs entre le palpeur de mesure (MTS) et une pièce le long de l'axe central Z du capteur de mesure des signaux de palpage à compensation de température (TKAS) et en cas de mouvements relatifs entre la palpeur de mesure (MTS) et une pièce dans le plan de support X, Y du palpeur de mesure (MTS) des signaux non compensés en température du capteur de palpage (ASE).

7. Palpeur de mesure à compensation de température (MTS) selon la revendication 6, le détecteur de sens de mouvement (BRD)étant conçu pour déterminer des signaux de direction à partir du taux de modification de signal du signal de mesure analogique en fonction de la course et en cas de mouvements relatifs entre la palpeur de mesure (MTS) et une pièce, délivrer des signaux de palpage (TKAS) à compensation de température le long de l'axe central Z du palpeur de mesure, et en cas de mouvements relatifs entre le palpeur de mesure (MTS) et une pièce dans le plan de support X, Y du palpeur de mesure (MTS), délivrer des signaux non compensés de température dudit capteur de palpage (ASE)
et/ou
le détecteur de sens de mouvement (BRD) évaluant un taux de modification de signal élevé du signal de mesure analogique en fonction de la course du capteur de palpage (ASE) en tant que mouvement relatif entre le palpeur de mesure (MTS) et une pièce le long de l'axe central Z du palpeur de mesure (MTS) et un taux de modification de signal faible comparativement au signal de mesure analogique en fonction de la course du capteur de palpage (ASE) en tant que mouvement relatif entre le palpeur de mesure (MTS) et une pièce dans le plan de support X, Y de la palpeur de mesure (MTS).

8. Palpeur de mesure à compensation de température (MTS) selon l'une quelconque des revendications précédentes, plusieurs capteurs de palpage (ASE) pour les différents sens de mouvements relatifs entre le palpeur de mesure (MTS) et une pièce sont prévus, la disposition mécanique et l'orientation des capteurs de palpage (ASE) permettant que seul un signal activé à compensation de température par un capteur de palpage (ASE) associé à la direction Z soit fourni au dispositif de mise en relation (VE) et/ou que seul le signal du capteur de palpage (ASE) associé à la direction Z soit être compensé en termes de température.

9. Palpeur de mesure à compensation de température (MTS) selon l'une quelconque des revendications précédentes, plusieurs capteurs d'accélération servant à détecter les différents sens de mouvements relatifs entre le palpeur de mesure (MTS) et une pièce, la disposition mécanique et l'orientation des capteurs d'accélération permettant que seul pour un capteur de sens de mouvement associé à la direction Z soit délivré un signal activé à compensation de température au dispositif de mise en relation (VE).

10. Palpeur de mesure à compensation de température (MTS) selon l'une quelconque des revendications précédentes, les capteurs servant à détecter les différents sens des mouvements relatifs entre le palpeur de mesure (MTS) et une pièce et à évaluer le palpage selon un angle de palpage (α) incliné dans le plan XY dans l'espace XYZ, une valeur de mesure totale définie étant compensée proportionnellement à une proportion Z pour traiter un temps de retard à l'aide d'une fonction de l'angle de palpage (α) dans le dispositif de mise en relation (VE).

11. Palpeur de mesure à compensation de température (MTS) selon la revendication précédentes, (i) l'angle de palpage (α) étant transmis depuis la commande de machine au palpeur de mesure (MTS) avant que le palpeur de mesure (MTS) ne palpe une pièce, ou (ii) les signaux restituant l'angle de palpage (α) à partir des détecteurs de sens de mouvement (BRD) disposés dans le palpeur de mesure (MTS) qui sont introduits dans le dispositif de mise en relation (VE) ou (iii) un signal à partir d'un capteur associé au dispositif de palpage (TE) étant acheminé pour déterminer l'apparition de la force dans le dispositif de mise en relation (VE).

12. Palpeur de mesure à compensation de température (MTS) selon la revendication précédente, pour déterminer l'angle de palpage (α) tant la vitesse de modification de signal dans le capteur de palpage (ATS) qu'une force de palpage mesurée dans la tige de la direction de palpage (TE) ou dans le corps de support à l'aide d'au moins un capteur, est évaluée dans le dispositif de mise en relation (VE).

13. Palpeur de mesure à compensation de température (MTS) selon l'une quelconque des revendications précédentes, pour déterminer l'angle de palpage (α) des capteurs étant disposés dans plusieurs endroits du corps de support ou sur son appui dans le boîtier du palpeur de mesure (MTS), lesdits capteurs étant conçus pour délivrer les variations de force se produisant au niveau du dispositif de mise en relation (VE) lors du palpage du palpeur de mesure sur une pièce.

14. Palpeur de mesure à compensation de température (MTS) selon l'une quelconque des revendications précédentes, plusieurs capteurs dans le palpeur de mesure pour les différentes directions des mouvements relatifs entre le palpeur de mesure (MTS) et une pièce servant à émettre un signal au moyen de leur disposition mécanique et orientation en cas de déformations, en fonction desquelles l'angle de déformation (α) est déterminé dans le dispositif de mise en relation (VE), et le retard d'un signal de commutation de palpage étant multiplié par le sinus de l'angle de palpage (α) pour la compensation de température.

15. Palpeur de mesure à compensation de température (MTS) selon l'une quelconque des revendications précédentes, le dispositif de mise en relation (VE) servant à prédéfinir manuellement le sens des mouvements relatifs entre le palpeur de mesure (MTS) et une pièce à l'aide d'un commutateur, et/ou
le dispositif de mise en relation (VE) servant à définir le sens des mouvements relatifs entre le palpeur de mesure (MTS) et une pièce par la commande numérique (NC) de la machine d'usinage de pièces (WBM).

16. Palpeur de mesure à compensation de température (MTS) selon la revendication précédente, la commande numérique (NC) de la machine d'usinage de pièces (WBM) transmettant au palpeur de mesure (MTS) au moyen d'une interface de données au début de chaque mouvement de mesure, le sens du mouvement, de sorte qu'en cas d'un mouvement relatif entre le palpeur de mesure (MTS) et une pièce le long de l'axe Z du palpeur de mesure (MTS) la compensation de température soit activée par le dispositif de mise en relation (VE).

17. Palpeur de mesure à compensation de température (MTS) selon l'une quelconque des revendications précédentes, le palpeur de mesure (MTS) étant conçu pour transmettre une valeur de correction de longueur ou de température à la commande numérique (NC) de la machine d'usinage de pièces (WBM) par l'intermédiaire de l'interface de données au début de chaque mouvement de mesure entre le palpeur de mesure (MTS) et la pièce ou à des intervalles temporels,
et
la commande numérique (NC) étant conçue pour calculer, pour des mesures le long de l'axe Z du palpeur de mesure (MTS) ou des mesures le long d'un sens de palpage, qui s »écarte spatialement de l'axe Z, la valeur de correction de longueur ou de température à l'aide d'une valeur de position déterminée par un système de mesure de course de la machine d'usinage de pièces (WBM).
